(19) Europäisches Patentamt / European Patent Office / Office européen des brevets

(11) **EP 4 379 319 B1**

(12) **EUROPEAN PATENT SPECIFICATION**

(45) Date of publication and mention
of the grant of the patent:
**25.03.2026 Bulletin 2026/13**

(21) Application number: **22863068.7**

(22) Date of filing: **11.08.2022**

(51) International Patent Classification (IPC):
**G01C 19/5747** *(2012.01)*

(52) Cooperative Patent Classification (CPC):
**G01C 19/5747**

(86) International application number:
**PCT/CN2022/111629**

(87) International publication number:
**WO 2023/029927 (09.03.2023 Gazette 2023/10)**

(54) **INERTIAL SENSOR AND ELECTRONIC DEVICE**

TRÄGHEITSSENSOR UND ELEKTRONISCHE VORRICHTUNG

CAPTEUR INERTIEL ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2021 CN 202111016671**

(43) Date of publication of application:
**05.06.2024 Bulletin 2024/23**

(73) Proprietor: **Huawei Technologies Co., Ltd.
Shenzhen, Guangdong 518129 (CN)**

(72) Inventors:
• **HU, Qifang
Shenzhen, Guangdong 518129 (CN)**
• **ZHENG, Yuanliao
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
WO-A1-2021/074346    CN-A- 103 175 982
CN-A- 106 871 887    CN-A- 109 798 886
TW-A- 201 836 967    US-A1- 2002 078 746
US-A1- 2007 131 030    US-A1- 2011 185 813
US-A1- 2011 232 384    US-A1- 2013 333 470
US-A1- 2014 360 265    US-A1- 2018 135 985

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## TECHNICAL FIELD

This application relates to the field of inertia sensing and the field of electronic devices, and more specifically, to an inertial sensor and an electronic device.

## BACKGROUND

An electronic device may detect a motion status like a tilt angle of the electronic device by using an inertial sensor (which may also be referred to as an inertial measurement unit (inertial measurement unit, IMU)). The inertial sensor plays an important role in application scenarios such as image stabilization during photographing, navigation, game orientation, and screen rotation.

US 2013/333470 A1 discloses a planar Coriolis gyroscope comprising at least two counter oscillating masses attached to a common rigid frame by means of a first plurality of elastic members and constituting an excitation axis.

US 2011/232384 A1 discloses a structure having a first movable portion that is displaced perpendicular to a substrate surface and a second movable portion that is displaced parallel to the substrate surface.

The inertial sensor may be configured to detect an angular velocity of the electronic device relative to a plurality of rotationally symmetrical beams. If motion of the inertial sensor relative to a rotationally symmetrical beam A affects detection of an angular velocity of a rotationally symmetrical beam B, a detection result of the inertial sensor may be inaccurate. In the inertial sensor, if a part for detecting an angular velocity of the rotationally symmetrical beam A and a part for detecting the angular velocity of the rotationally symmetrical beam B are separately disposed and do not interfere with each other, an overall size of the inertial sensor may be increased. Therefore, how to consider a size and detection precision of the inertial sensor is a problem to be resolved.

## SUMMARY

This application provides an inertial sensor and an electronic device according to the independent claims, to provide an inertial sensor with a small structure and high detection precision, so as to help improve application performance of the inertial sensor in the electronic device.

According to a first aspect, an inertial sensor is provided, including:

a first mass block and a first detection electrode, where the first mass block can move relative to the first detection electrode, the first mass block and the first detection electrode are arranged in a first direction to form a first capacitor, and the first capacitor is configured to detect an angular velocity around a second direction;

a second mass block and a second detection electrode, where the second mass block can move relative to the second detection electrode, the second mass block and the second detection electrode are arranged in the second direction to form a second capacitor, and the second capacitor is configured to detect an angular velocity around the first direction; and

a first connector, where the first connector is connected between a first end of the first mass block and a first end of the second mass block, where

the first mass block is driven to have a displacement component in a third direction, and the first direction, the second direction, and the third direction are orthogonal to each other;

when the first mass block has an angular velocity component around the first direction, the first mass block has a displacement component in the second direction, the first mass block is configured to pull, by using the first connector, the second mass block to move in the second direction, and a displacement component of the second mass block in the second direction corresponds to a capacitance value variation of the second capacitor; and

when the first mass block has an angular velocity component around the second direction, the first mass block has a displacement component in the first direction, and the displacement component of the first mass block in the first direction corresponds to a capacitance value variation of the first capacitor.

In this application, the first mass block pulls the second mass block in the second direction, to detect an angular velocity of the second mass block around the first direction. When the first mass block detects an angular velocity around the second direction, the first mass block has displacement components in the first direction and the third direction, and the first mass block may be considered to be still in the second direction. When the second mass block detects an angular velocity around the first direction, the second mass block has a displacement component in the second direction. Based on a detection principle, when the first mass block has only the angular velocity component around the second direction, the first mass block may not have the displacement component in the second direction. Therefore, the detection of the angular velocity around the second direction by the first mass block hardly affects the detection of the angular velocity around the first direction by the second mass block. This helps reduce application of differential decoupling on the inertial sensor, and helps improve detection precision of the inertial sensor. In addition, the inertial sensor provided in this application may provide power for the first mass block and the second mass block by using one drive source, thereby helping reduce detection precision of the inertial sensor.

When the second mass block has only the angular velocity component around the second direction, the first mass block has a smaller displacement component in the second direction, and the first mass block has a smaller pull force on the second mass block in the second direction. Therefore, this helps reduce a coupling degree between the first mass block and the second mass block, and reduce mutual impact between the first mass block and the second mass block.

The first connector includes a first elastic connector. The first elastic connector is configured to provide buffer space in the first direction and the third direction for the first mass block, so that a displacement component of the first end of the second mass block in the first direction is less than a displacement component of the first end of the first mass block in the first direction, and a displacement component of the first end of the second mass block in the third direction is less than a displacement component of the first end of the first mass block in the third direction.

The first elastic connector has a buffer function between the first mass block and the second mass block. When the first mass block detects an angular velocity around the second direction, a displacement of the first mass block in the first direction may be large. The first elastic connector helps reduce a displacement of the second mass block in the first direction after the second mass block is pulled by the first mass block. When the first mass block moves back and forth in the third direction, a displacement of the first mass block in the third direction may be large. The first elastic connector helps reduce a displacement of the second mass block in the third direction after the second mass block is pulled by the first mass block. The first elastic connector may help reduce impact of displacement components of the first mass block in the second direction and the third direction on the second mass block.

Rigidity of the first elastic connector in the second direction may be, for example, less than rigidity of the first elastic connector in the first direction. Rigidity of the first elastic connector in the third direction may be, for example, less than the rigidity of the first elastic connector in the first direction.

With reference to the first aspect, in some implementations of the first aspect, the first connector further includes: a first support beam, where the first support beam is connected between the first elastic connector and the second mass block.

The first support beam is connected between the first elastic connector and the second mass block. This helps further absorb a displacement component that cannot be absorbed by the first elastic connector, and helps reduce the displacement of the second mass block in the first direction and/or the third direction after the second mass block is pulled by the first mass block.

With reference to the first aspect, in some implementations of the first aspect, the first connector further includes: a first transmission beam, where the first transmission beam extends in the third direction, an end of the first transmission beam is connected between the first elastic connector and the second mass block, and when the first mass block has the angular velocity component around the first direction, the first transmission beam can rotate around the first direction.

In other words, when the first mass block has the angular velocity component around the first direction, the first transmission beam may have a rotation angle around the first direction.

A location of a part of the first transmission beam is fixed, and a deformable amount of the first transmission beam is small. When the first mass block shifts in the first direction, the first mass block tends to pull the second mass block to move in the first direction. The second mass block may be reversely pulled by a second part of the first transmission beam, to further reduce the displacement of the second mass block in the first direction after the second mass block is pulled by the first mass block.

With reference to the first aspect, in some implementations of the first aspect, when the first mass block has the angular velocity component around the second direction, a rotation angle of the first transmission beam around the second direction is less than a rotation angle of the first mass block around the second direction.

The first transmission beam is connected between the first mass block and the second mass block, and the rotation angle of the first transmission beam around the second direction is small. This helps reduce a deformation amount of the second mass block.

In an embodiment, a length of the first transmission beam may be great. For example, a half of a length of the first transmission beam in the third direction may be greater than a length of the second mass block in the third direction.

With reference to the first aspect, in some implementations of the first aspect, the first mass block extends from the first end of the second mass block to a second end of the second mass block. The inertial sensor further includes: a second connector, where the second connector is connected between a second end of the first mass block and the second end of the second mass block, and the second connector and the first connector are symmetrical with respect to the second mass block.

The first mass block may pull the second mass block from two ends of the second mass block, and connectors at the two ends of the second mass block are also symmetrical. This helps improve symmetry of the displacement of the second mass block in the first direction, and further helps improve detection precision of the inertial sensor.

With reference to the first aspect, in some implementations of the first aspect, the inertial sensor further includes:

a drive electrode and a drive block, where a capacitor formed by the drive electrode and the drive block is configured to drive the drive block to move back and forth in the third direction relative to the drive electrode; and
a second support beam, where the second support beam is connected between the drive block and the first mass block, and the drive block is configured to drive the first mass block by using the second support beam, so that the first mass block has the displacement component in the third direction.

The drive block may drive the first mass block from a side away from the second mass block. This helps reduce impact caused by the drive block on motion of the second mass block when the drive block pulls the first mass block, and further helps improve detection precision of the inertial sensor.

With reference to the first aspect, in some implementations of the first aspect, the inertial sensor further includes: a third mass block and a third detection electrode, where the third mass block can move relative to the third detection electrode, the third mass block and the third detection electrode are arranged in the first direction to form a third capacitor, the third capacitor is configured to detect an angular velocity around the third direction, the third mass block is driven to have a displacement component in the second direction, and when the third mass block has an angular velocity component around the third direction, the third mass block has a displacement component in the first direction, and the displacement component of the third mass block in the first direction corresponds to a capacitance value variation of the third capacitor.

Because the third mass block moves back and forth in the second direction, and the third mass block and the third detection electrode are arranged in the first direction, motion and detection of the third mass block have small impact on the first mass block and the second mass block, so that the inertial sensor can have high precision while detecting a three-axis angular velocity.

With reference to the first aspect, in some implementations of the first aspect, the first mass block is driven by the drive block. The drive block is configured to move back and forth in the third direction, and a steering beam is connected between the third mass block and the drive block. An end that is of the steering beam and that is close to the drive block is configured to move back and forth in the third direction, and an end that is of the steering beam and that is close to the third mass block is configured to move back and forth in the second direction, so that the third mass block has the displacement component in the second direction.

The first mass block and the third mass block are driven by using a same drive block. This helps reduce a quantity of components in the inertial sensor, helps improve a coupling degree of the first mass block, the second mass block, and the third mass block, and helps improve detection precision of the inertial sensor.

With reference to the first aspect, in some implementations of the first aspect, the inertial sensor further includes: a second elastic connector, where the second elastic connector is connected between the drive block and the first mass block, and is configured to provide buffer space in the first direction for the third mass block.

When the third mass block detects an angular velocity around the third direction, the third mass block may shift in the first direction. The second elastic connector may help absorb the displacement component in the first direction, thereby reducing impact of the third mass block on the drive block.

Rigidity of the second elastic connector in the second direction may be, for example, greater than rigidity of the second elastic connector in the first direction. Rigidity of the second elastic connector in the third direction may be, for example, greater than the rigidity of the second elastic connector in the first direction.

With reference to the first aspect, in some implementations of the first aspect, the inertial sensor further includes: a second transmission beam, where the second transmission beam is connected between the second elastic connector and the drive block, the second transmission beam can rotate around the third direction, and when the third mass block rotates around the third direction, a rotation angle of the second transmission beam around the third direction is less than a rotation angle of the third mass block around the third direction.

The second transmission beam may be connected between the third mass block and a symmetrical mass block of the third mass block. A deformable amount of the second transmission beam is small. When the third mass block and the symmetrical mass block of the third mass block are oppositely shifted in the first direction, the second transmission beam may reversely pull both the third mass block and the symmetrical mass block of the third mass block. This helps improve symmetry of displacements of the third mass block and the symmetrical mass block of the third mass block in the first direction.

With reference to the first aspect, in some implementations of the first aspect, the inertial sensor further includes: a third elastic connector, where the third elastic connector is connected to the third mass block, and the third elastic connector is configured to provide a support force in the first direction for the third mass block, and is further configured to provide buffer space in the second direction for the third mass block.

The third elastic connector may provide a torsion force and a support force for the third mass block, so that the

# EP 4 379 319 B1

third mass block moves in a preset manner.

Rigidity of the third elastic connector in the second direction may be, for example, less than rigidity of the third elastic connector in the first direction. Rigidity of the third elastic connector in the third direction may be, for example, less than the rigidity of the third elastic connector in the first direction. The rigidity of the third elastic connector in the second direction may be, for example, less than the rigidity of the third elastic connector in the third direction.

With reference to the first aspect, in some implementations of the first aspect, the third elastic connector is located on a side that is of the third mass block and that is away from the second mass block.

In embodiments of this application, a natural frequency modal of the inertial sensor is adjusted by using, for example, a rigidity design or a decoupling mode design, so that an effective modal of the inertial sensor can be away from an interference modal of the inertial sensor as far as possible. This improves filtering effect of the inertial sensor and reduces a noise level of the inertial sensor. Further, by adjusting a detection frequency and a drive frequency of the inertial sensor, sensitivity of the inertial sensor is improved.

With reference to the first aspect, in some implementations of the first aspect, the inertial sensor includes a mechanical structure layer, a coverage layer, and a substrate layer. The mechanical structure layer is located between the coverage layer and the substrate layer, the first mass block and the second mass block are disposed on the mechanical structure layer, the first detection electrode is disposed on the substrate layer, and the second detection electrode is disposed on the substrate layer or the mechanical structure layer.

In an embodiment, the third mass block may be disposed on the mechanical structure layer, and the third detection electrode may be disposed on the substrate layer.

The solutions provided in this application may be applied to a micro-electro-mechanical system (micro-electro-mechanical system, MEMS) scenario, and are compatible with another component in an electronic device.

With reference to the first aspect, in some implementations of the first aspect, the inertial sensor is symmetrical with respect to the second direction, and the inertial sensor is symmetrical with respect to the third direction.

The mechanical structure layer has symmetry, to suppress impact of factors such as material strain and a processing deviation. The mechanical structure layer has symmetry, helps remove common-mode noise caused by the material strain, the processing deviation, and the like by applying a differential principle, and helps improve temperature drift performance, zero drift performance, and the like of the inertial sensor.

According to a second aspect, an electronic device is provided, including the inertial sensor according to any implementation of the first aspect.

## BRIEF DESCRIPTION OF DRAWINGS

FIG. 1 is a schematic diagram of a structure of an electronic device according to an embodiment of this application;
FIG. 2 is a schematic diagram of a structure of an inertial sensor according to an embodiment of this application;
FIG. 3A is a schematic diagram of a structure of an inertial sensor according to an embodiment of this application;
FIG. 3B is a motion diagram of an inertial sensor according to an embodiment of this application;
FIG. 4 is a principle diagram in which an inertial sensor detects an angular velocity around an X-axis according to an embodiment of this application;
FIG. 5 is a principle diagram in which an inertial sensor detects an angular velocity around a Y-axis according to an embodiment of this application;
FIG. 6 is a principle diagram in which an inertial sensor detects an angular velocity around a Z-axis according to an embodiment of this application;
FIG. 7A is a three-dimensional diagram of another inertial sensor according to an embodiment of this application;
FIG. 7B is a schematic diagram of a structure of another inertial sensor according to an embodiment of this application;
FIG. 7C is a motion diagram of another inertial sensor according to an embodiment of this application;
FIG. 8A is a three-dimensional diagram of another inertial sensor for detecting an angular velocity around an X-axis according to an embodiment of this application;
FIG. 8B is a schematic diagram of a structure of another inertial sensor for detecting an angular velocity around an X-axis according to an embodiment of this application;
FIG. 9A is a three-dimensional diagram of another inertial sensor for detecting an angular velocity around a Y-axis according to an embodiment of this application;
FIG. 9B is a schematic diagram of a structure of another inertial sensor for detecting an angular velocity around a Y-axis according to an embodiment of this application;
FIG. 10A is a three-dimensional diagram of another inertial sensor for detecting an angular velocity around a Z-axis according to an embodiment of this application; and
FIG. 10B is a schematic diagram of a structure of another inertial sensor for detecting an angular velocity around a Z-axis according to an embodiment of this application.

## DESCRIPTION OF EMBODIMENTS

The following describes technical solutions of this application with reference to accompanying drawings.

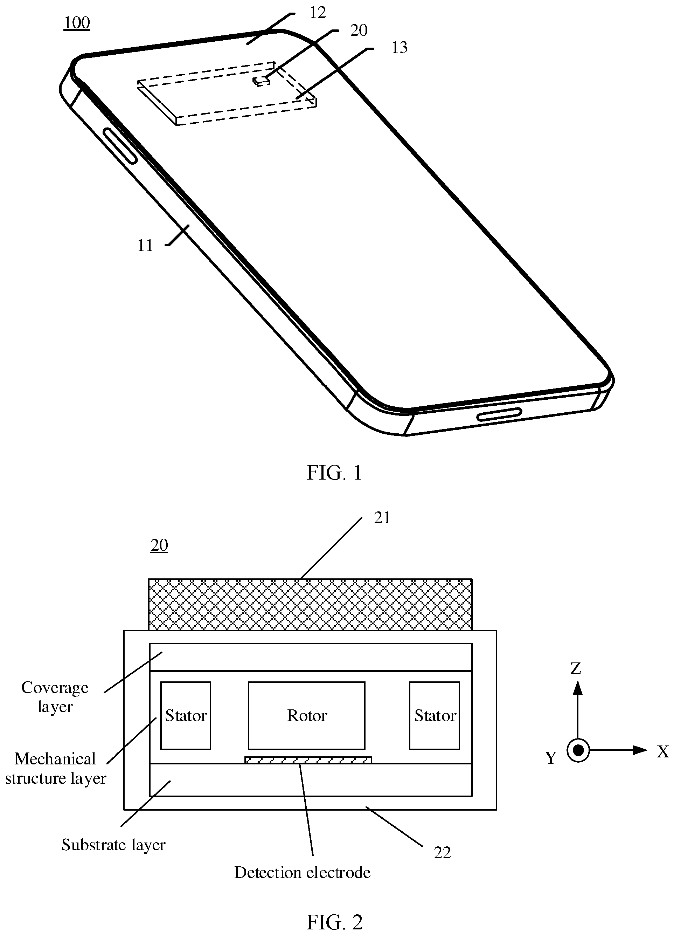

FIG. 1 is a schematic diagram of a structure of an electronic device 100 according to an embodiment of this application. The electronic device 100 may be, for example, a terminal consumer product or a 3C electronic product (a computer (computer) electronic product, a communication (communication) electronic product, or a consumer (consumer) electronic product), for example, a device like a mobile phone, a portable computer, a tablet computer, an e-reader, a notebook computer, a digital camera, a wearable device, a headset, a watch, or a stylus. In the embodiment shown in FIG. 1, an example in which the electronic device 100 is a mobile phone is used for description.

The electronic device 100 may include a housing 11, a display 12, and a circuit board assembly 13. Specifically, the housing 11 may include a frame and a rear cover. The frame may be located between the display 12 and the rear cover. The frame may surround a periphery of the display 12 and a periphery of the rear cover. A cavity formed between the display 12, the frame, and the rear cover may be configured to accommodate the circuit board assembly 13. The circuit board assembly 13 may include a circuit board and an inertial sensor 20 disposed on the circuit board. The circuit board may be, for example, a mainboard or a sub-board.

FIG. 2 shows two embodiments of the inertial sensor 20. In the embodiment shown in FIG. 2, the inertial sensor 20 may be a gyroscope, or may integrate an acceleration sensor and a gyroscope. In an embodiment in which the inertial sensor 20 integrates an acceleration sensor and a gyroscope, the inertial sensor 20 may be a sensor that can implement both a function of the acceleration sensor and a function of the gyroscope.

A gyroscope sensor may be configured to determine a motion posture of the electronic device 100. In some embodiments, an angular velocity of the electronic device 100 around each of three axes (namely, an X-axis, a Y-axis, and a Z-axis) may be determined by using the gyroscope sensor. The gyroscope sensor may be used for image stabilization during photographing. For example, when a shutter is pressed, the gyroscope sensor detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor may be further used in navigation and somatic game scenarios.

The acceleration sensor may detect accelerations in various directions (usually on three axes) of the electronic device 100. When the electronic device 100 is still, a magnitude and a direction of gravity may be detected. The acceleration sensor may be further configured to identify a posture of the electronic device 100, and is applied to applications such as a pedometer and switching between a landscape mode and a portrait mode.

As shown in FIG. 2, the inertial sensor 20 may include a chip 21 and one or more detection parts 22. Some or all of the detection parts 22 may also be referred to as a micro-electro-mechanical system (micro-electro-mechanical system, MEMS). The chip 21 may be electrically connected to the detection part 22. In the embodiment shown in FIG. 2, the inertial sensor 20 may include a single detection part 22. The chip 21 may obtain, by using the detection part 22, a signal related to an acceleration and/or an angular velocity. In another embodiment, the inertial sensor 20 may include two detection parts 22. The chip 21 may obtain an acceleration-related signal by using one detection part 22, and obtain an angular velocity-related signal by using the other detection part 22.

With reference to FIG. 1 and FIG. 2, the following describes a principle of obtaining a motion status of the electronic device 100 by using the inertial sensor 20.

The detection part 22 may include a substrate layer, a mechanical structure layer, and a coverage layer. The mechanical structure layer may be sealed and connected between the mechanical structure layer and the coverage layer. The mechanical structure layer may also be referred to as a MEMS layer. The mechanical structure layer may be a key part of the detection part 22 for implementing angular velocity detection.

The mechanical structure layer may include a rotor and a stator. The stator may be fastened in the inertial sensor 20. For example, the stator may be fastened to the substrate layer. There is a gap between the stator and the rotor, so that the stator and the rotor can form a capacitor. The capacitor formed by the stator and the rotor may be used to drive the rotor to move relative to the stator. For example, the rotor may be suspended above the substrate layer, and can move relative to the substrate layer. In an embodiment, each of the rotor and the stator may include, for example, a comb structure. A comb-shaped rotor may be a movable comb. A comb-shaped stator may be a fixed comb.

The inertial sensor 20 may further include a detection electrode. The detection electrode may be fastened in the inertial sensor 20. A capacitor may be formed between the rotor and the detection electrode. The capacitor formed by the rotor and the detection electrode may be configured to detect a motion status of the electronic device 100. In the embodiment shown in FIG. 2, for example, the detection electrode may be fastened to the substrate layer.

It is assumed that an XYZ coordinate system exists, where an X-axis, a Y-axis, and a Z-axis are orthogonal to each other. The embodiment shown in FIG. 2 is used as an example. The detection electrode and the rotor may be arranged along the Z-axis, and both the detection electrode and the rotor may be disposed in parallel relative to an XY surface. The chip 21 may send an alternating current signal to the detection part 22, to drive the rotor of the detection part 22 to move back and forth along the X-axis relative to the stator at a preset frequency in a translation manner. The movement hardly changes a spacing between the detection electrode and the rotor on the Z-axis. The spacing between the detection electrode and the rotor along the Z-axis may correspond to a capacitance value of the capacitor formed by the detection electrode and the rotor. Therefore, the capacitance value of the capacitor formed by the detection electrode and the rotor may basically remain unchanged.

When the electronic device 100 does not have any movement (including translation, rotation, and the like), the capacitance value of the capacitor formed by the detection electrode and the rotor may basically remain unchanged.

When the electronic device 100 has movement, for example, when the electronic device has an angular velocity component for rotating around the Y-axis under an external force, that is, when a rotation direction of the electronic device is a Y-axis direction, the rotor also tends to rotate around the Y-axis, and bears an additional acting force. The acting force may be referred to as a Coriolis force. A direction (for example, a Z-axis direction) of the acting force may be orthogonal to both a rotation direction (for example, the Y-axis direction) of the rotor and a movement direction (for example, an X-axis direction) of the rotor. Therefore, the acting force may change the spacing between the detection electrode and the rotor, to change the capacitance value of the capacitor formed by the detection electrode and the rotor. The chip 21 may obtain, by obtaining a capacitance value variation of the capacitor formed by the detection electrode and the rotor, an angular velocity $\omega$ of the electronic device 100 for rotating around the Y-axis.

A spacing variation $y$ between the detection electrode and the rotor may be determined based on the capacitance value variation $\Delta C$. The capacitance value variation $\Delta C$ and the spacing variation $y$ may satisfy, for example, the following formula:

$$y = \frac{\Delta C \bullet d^2}{\varepsilon A}.$$

Based on rigidity $k$ of the rotor and the spacing variation $y$, the Coriolis force $F$ borne by the rotor can be determined. The Coriolis force $F$, the rigidity $k$, and the spacing variation $y$ may satisfy, for example, the following formula:

$$F = k \bullet y.$$

An angular velocity $\omega$ of the rotor may be determined based on the Coriolis force $F$, rotor mass $m$, and a rate $v$ at which the rotor moves back and forth. The Coriolis force $F$, the rotor mass $m$, the rate $v$ at which the rotor moves back and forth, and the angular velocity $\omega$ may satisfy, for example, the following formula:

$$\omega = \frac{F}{-2m \bullet v}.$$

When the electronic device 100 actually moves, the electronic device 100 may rotate around the three axes: the X-axis, the Y-axis, and the Z-axis. The inertial sensor may obtain angular velocities around the X-axis, the Y-axis, and the Z-axis with reference to the foregoing principle.

In an example, the inertial sensor may include three detection systems that are independent of each other. The three detection systems may be independently driven and are configured to detect angular velocities around the X-axis, the Y-axis, and the Z-axis. However, in this way, space occupied by the inertial sensor is large.

In another example, the inertial sensor may include a detection system A. In a structural design, the detection system A may be configured to detect an angular velocity in a direction A, and may be further configured to detect an angular velocity in a direction B, to implement detection coupling between the direction A and the direction B. However, when the detection system A detects the angular velocity around the direction A, if motion of the detection system A affects detection of the angular velocity around the direction B, detection precision of the inertial sensor may be poor.

Processing precision of the inertial sensor is also high, to ensure the detection precision of the inertial sensor.

To resolve the foregoing problem, embodiments of this application provide a series of technical solutions, to enable the inertial sensor to meet various requirements, and help improve application performance of the inertial sensor in an electronic device. For example, the inertial sensor provided in embodiments of this application may have features such as a small size, excellent detection precision, and low processing difficulty.

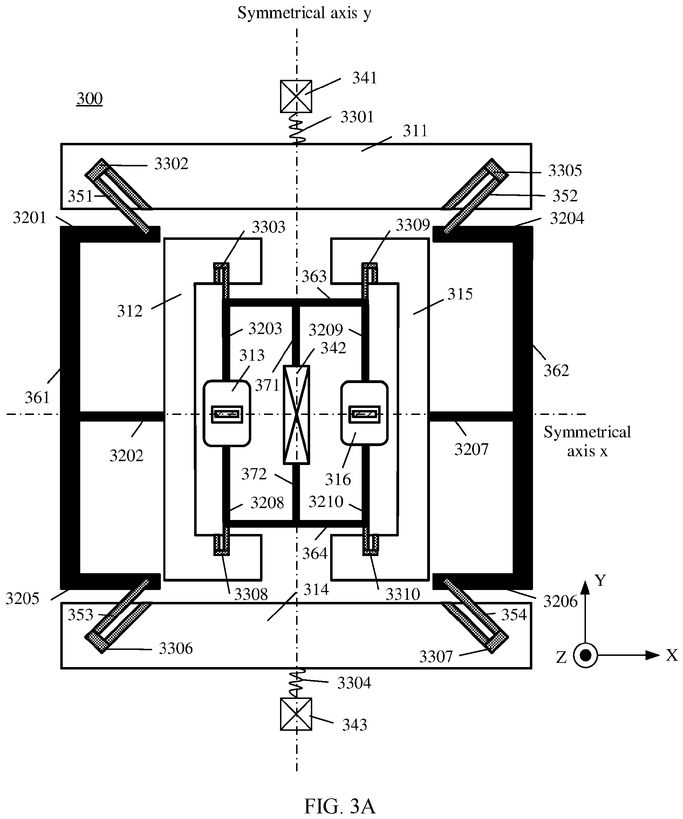

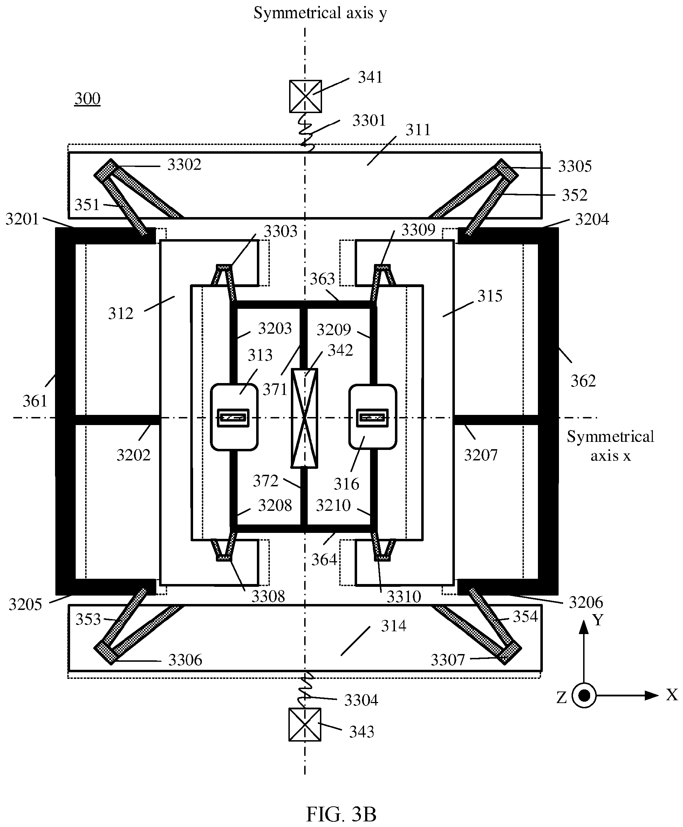

FIG. 3A is a schematic diagram of a structure of a mechanical structure layer 300 according to an embodiment of this application. FIG. 3B is a schematic diagram of motion of a rotor of the mechanical structure layer 300 shown in FIG. 3A when the mechanical structure layer 300 is not rotated. For ease of description, as shown in FIG. 3A and FIG. 3B, it is assumed that an XYZ coordinate system exists, an XY plane is parallel to the paper in FIG. 3A and FIG. 3B, and a Z-axis is perpendicular to the paper in FIG. 3A and FIG. 3B. An X-axis, a Y-axis, and the Z-axis are orthogonal to each other. The mechanical structure layer 300 may be disposed in parallel relative to the XY plane.

The mechanical structure layer 300 may include a mass block 311, a mass block 312, and a mass block 313. The mass block 311 is configured to detect an angular velocity around the X-axis. The mass block 312 is configured to detect an angular velocity around the Y-axis. The mass block 313 is configured to detect an angular velocity around the Z-axis.

The mechanical structure layer 300 further includes a support beam 3201. The support beam 3201 is driven to have a displacement component in an X-axis direction. When the inertial sensor is not subject to an external force, the support beam 3201 may move back and forth along the X-axis. For example, the mechanical structure layer 300 further includes a drive block (not shown in FIG. 3A and FIG. 3B), and the drive block is connected to the support beam 3201, so that the drive block may be configured to drive the support beam 3201 to move back and forth along the X-axis.

In this application, a part may have displacement components in an X-axis direction, a Y-axis direction, and a Z-axis direction. The displacement component of the part in the X-axis direction may be a projection of a displacement of the part on the X-axis. The displacement component of the part in the Y-axis direction may be a projection of a displacement of the part on the Y-axis. The displacement component of the part in the Z-axis direction may be a projection of a displacement of the part on the Z-axis. A displacement of the part may be a vector sum of the displacement component of the part in the X-axis direction, the displacement component of the part in the Y-axis direction, and the displacement component of the part in the Z-axis direction. When the part has the displacement component only on the X-axis, the part may move along the X-axis. When the part has the displacement component only on the Y-axis, the part may move along the Y-axis. When the part has the displacement component only on the Z-axis, the part may move along the Z-axis.

In an embodiment, the drive block may include a driving piece 1 and a driving piece 2. The driving piece 1 may belong to a stator. The driving piece 1 and the driving piece 2 may form a capacitor. By configuring an alternating current signal on the driving piece 1 and the driving piece 2, the driving piece 2 may move back and forth along the X-axis relative to the driving piece 1. The support beam 3201 may be connected to the driving piece 2, and the support beam 3201 may move back and forth under driving of the driving piece 2. In another embodiment, the support beam 3201 may be driven to move back and forth in another manner.

An end of the support beam 3201 may be disposed close to the mass block 311. A displacement component of the support beam 3201 in the X-axis direction may be used to drive the mass block 311 to move along the Y-axis. The mechanical structure layer 300 further includes a steering beam 351. The steering beam 351 may transfer a translation driving force between the support beam 3201 and the mass block 311, so that the mass block 311 moves back and forth under driving of the support beam 3201. In addition, the steering beam 351 is further configured to convert a translation driving force along the X-axis from the support beam 3201 into a translation driving force along the Y-axis, so that the mass block 311 has a displacement component in the Y-axis direction under an action of the steering beam 351. When the inertial sensor is not subject to an external force, the mass block 311 may move back and forth along the Y-axis. For example, the steering beam 351 may be connected between the support beam 3201 and the mass block 311. In an embodiment, an included angle between the steering beam 351 and the X-axis may be approximately 45°, and an included angle between the steering beam 351 and the Y-axis may be approximately 45°.

The mechanical structure layer 300 may further include an anchor 341 and an elastic connector 3301. The elastic connector 3301 may be connected between the anchor 341 and the mass block 311.

In this application, the anchor may belong to a stator. For example, the anchor may be fastened to the substrate layer shown in FIG. 2. In this application, compared with the support beam, the elastic connector may have smaller rigidity.

The elastic connector 3301 may be configured to support the mass block 311, so that the mass block 311 is suspended between the substrate layer and the coverage layer shown in FIG. 2. The elastic connector 3301 may be configured to provide suspension support along the Z-axis for the mass block 311, so that the mass block 311 is suspended between the substrate layer and the coverage layer shown in FIG. 2. In other words, the elastic connector 3301 may have large rigidity in the Z-axis direction. The elastic connector 3301 may be further configured to provide buffer space in the Y-axis direction between the mass block 311 and the anchor 34. In other words, the elastic connector 3301 may have small rigidity in the Y-axis direction, or the elastic connector 3301 may have elasticity in the Y-axis direction.

FIG. 3B is a schematic diagram of a structure in which the mass block 311 moves along the Y-axis under an action of the support beam 3201. A dashed line in FIG. 3B shows a location of the mass block 311 before movement, and a solid line in FIG. 3B shows a location of the mass block 311 after movement.

To facilitate movement of the mass block 311, the mechanical structure layer 300 may further include an elastic connector 3302. The elastic connector 3302 may have small rigidity or have elasticity in the X-axis direction and the Y-axis direction, to facilitate relative movement of the support beam 3201 and the mass block 311 in a preset direction. For example, the elastic connector 3302 may be configured to absorb a displacement along the X-axis, to reduce a displacement component of the mass block 311 in the X-axis direction. This facilitates movement of the mass block 311 along the Y-axis. The elastic connector 3302 may be configured to absorb a displacement along the Y-axis, to reduce a displacement component of the support beam 3201 in the Y-axis direction. This facilitates movement of the support beam 3201 along the X-axis.

The mechanical structure layer 300 may further include a support beam 3202. The support beam 3202 is driven to have a displacement component in the X-axis direction. When the inertial sensor is not subject to an external force, the support beam 3202 may move back and forth along the X-axis. For an embodiment in which the support beam 3202 is driven to move back and forth, refer to the foregoing embodiment in which the support beam 3201 is driven to move back and forth. In the embodiment shown in FIG. 3A, the support beam 3202 may be connected to the support beam 3201. Because directions of forces for driving the support beam 3201 and the support beam 3202 to move back and forth may be along the X-axis and are the same, the support beam 3201 and the support beam 3202 may be driven by a same drive block.

The support beam 3202 may be further connected to the mass block 312. The support beam 3202 may move back and forth to drive the mass block 312 to move along the X-axis. FIG. 3B is a schematic diagram of a structure in which the mass block 312 moves along the X-axis under an action of the support beam 3202. A dashed line in FIG. 3B shows a location of the mass block 312 before movement, and a solid line in FIG. 3B shows a location of the mass block 312 after movement.

The mechanical structure layer 300 further includes a support beam 3203 and an anchor 342. The support beam 3203 is connected between the anchor 342 and the mass block 313. The support beam 3203 is configured to support the mass block 313, so that the mass block 313 is suspended between the substrate layer and the coverage layer shown in FIG. 2. The support beam 3203 may be configured to provide suspension support for the mass block 313.

The mechanical structure layer 300 may further include an elastic connector 3303. The elastic connector 3303 may be connected between the mass block 312 and the mass block 313. As shown in FIG. 3A and FIG. 3B, the mass block 312 and the mass block 313 may be connected to the support beam 3203 by using the elastic connector 3303.

The elastic connector 3303 is configured to provide buffer space along the X-axis for the mass block 312. In other words, the elastic connector 3303 may have small rigidity or have elasticity on the X-axis. As described above, the mass block 312 may have a displacement component in the X-axis direction under an action of the support beam 3202. When the inertial sensor is not subject to an external force, the mass block 312 may move back and forth along the X-axis. The elastic connector 3303 may be configured to absorb a displacement along the X-axis, to reduce a displacement component of the mass block 313 in the X-axis direction under pulling of the mass block 312, as shown in FIG. 3B.

The mechanical structure layer 300 has symmetry, to suppress impact of factors such as material strain and a processing deviation. The mechanical structure layer 300 has symmetry, helps remove common-mode noise caused by the material strain, the processing deviation, and the like by applying a differential principle, and helps improve temperature drift performance, zero drift performance, and the like of the inertial sensor.

The mechanical structure layer 300 may be symmetrical with respect to a symmetry axis x, and may be symmetrical with respect to the symmetry axis x. The symmetry axis x may be parallel to the X-axis, and the symmetry axis x may be parallel to the Y-axis. In this application, movement directions of two structures that are symmetrical with respect to the symmetry axis x or the symmetry axis y may be symmetrical or reverse.

In the embodiments shown in FIG. 3A and FIG. 3B, the support beam 3202 and the support beam 3203 may correspond to the symmetry axis x of the mechanical structure layer 300. The mechanical structure layer may further include a symmetrical beam 371 and a symmetrical beam 372. The symmetrical beam 371 and the symmetrical beam 372 are located on two sides of the anchor 342, and both the symmetrical beam 371 and the symmetrical beam 372 are connected to the anchor 342. The symmetrical beam 371 and the symmetrical beam 372 may correspond to the symmetry axis y of the mechanical structure layer 300. The anchor 342 may be disposed at an intersection position of the symmetry axis x and the symmetry axis x.

A mass block 1 is symmetrical with respective to the symmetry axis y. A mass block 2 may be symmetrical with respective to the symmetry axis x. A mass block 3 may be symmetrical with respective to the symmetry axis x. The mechanical structure layer 300 may further include a mass block 314, a mass block 315, and a mass block 316. The mass block 314 is configured to detect an angular velocity around the X-axis. The mass block 315 is configured to detect an angular velocity around the Y-axis. The mass block 316 is configured to detect an angular velocity around the Z-axis. A mass block 4 is symmetrical with respective to the symmetry axis y. A mass block 5 may be symmetrical with respective to the symmetry axis x. A mass block 6 may be symmetrical with respective to the symmetry axis x. The mass block 314 and the mass block 311 may be symmetrically disposed with respect to the symmetry axis x. The mass block 315 and the mass block 312 are symmetrically disposed with respect to the symmetry axis y. The mass block 316 and the mass block 313 are symmetrically disposed with respect to the symmetry axis y.

The mechanical structure layer 300 may further include a support beam 3204, a support beam 3205 and a support beam 3206. The support beam 3204, the support beam 3205 and the support beam 3206 are driven to each have a displacement component in the X-axis direction. When the inertial sensor is not subject to an external force, the support beam 3204, the support beam 3205 and the support beam 3206 may move back and forth along the X-axis. In an embodiment, the support beam 3204 and the support beam 3201 may be symmetrically disposed with respect to the symmetry axis y. The support beam 3205 and the support beam 3201 are symmetrically disposed with respect to the symmetry axis x. The support beam 3206 and the support beam 3205 are symmetrically disposed with respect to the symmetry axis y.

In the embodiment shown in FIG. 3A, the support beam 3201 and the support beam 3205 may be connected by using a transmission beam 361. The transmission beam 361 may be symmetrical relative to the symmetry axis x. The support beam 3204 and the support beam 3206 may be connected by using a transmission beam 362. The transmission beam 362 may be symmetrical with respect to the symmetry axis x. The transmission beam 361 and the transmission beam 2 may be symmetrical with respect to the symmetry axis y.

The support beam 3204 and the support beam 3201 may be respectively connected to two ends of the mass block 311. The support beam 3201 may move back and forth to drive one end of the mass block 311 to move along the Y-axis, and the support beam 3204 may move back and forth to drive the other end of the mass block 311 to move along the Y-axis, so that the mass block 311 may have a displacement component in the Y-axis direction under an action of the support beam 3201 and the support beam 3204. A movement direction of the support beam 3201 and a movement direction of the support beam 3204 in the X-axis direction may be reverse. The support beam 3201 and the support beam 3204 may be driven by different drive blocks. Therefore, the mass block 311 may be driven by two different drive blocks. In an embodiment, the drive block used to drive the support beam 3201 and the drive block used to drive the support beam 3204 may be symmetrical with respect to the symmetry axis y.

The mechanical structure layer 300 may further include a steering beam 352. In an embodiment, the steering beam 352 and the steering beam 351 may be symmetrical with respect to the symmetry axis y. The steering beam 351 may transfer a translation driving force between the support beam 3201 and one end of the mass block 311, and the steering beam 352 may transfer a translation driving force between the support beam 3204 and the other end of the mass block 311, so that the mass block 311 moves back and forth under driving of the support beam 3201 and the support beam 3204. In addition, the steering beam 352 is further configured to convert a translation driving force along the X-axis from the support beam 3204 into a translation driving force along the Y-axis, so that the mass block 311 has a displacement component in the Y-axis direction under an action of the steering beam 351, and the steering beam 352. For a related embodiment of the steering beam 352, refer to a related embodiment of the steering beam 351.

The support beam 3205 and the support beam 3206 may be respectively connected to two ends of the mass block 314. The support beam 3205 may move back and forth to drive one end of the mass block 314 to move along the Y-axis, and the support beam 3206 may move back and forth to drive the other end of the mass block 314 to move along the Y-axis, so that the mass block 314 may have a displacement component in the Y-axis direction under an action of the support beam 3205 and the support beam 3206.

A movement direction of the support beam 3205 and a movement direction of the support beam 3206 in the X-axis direction may be reverse. The support beam 3205 and the support beam 3206 may be driven by different drive blocks. The mass block 314 may be driven by two different drive blocks. The two drive blocks configured to drive the mass block 314 may be further configured to drive the mass block 311.

Based on symmetry, a movement direction of the support beam 3205 may be the same as a movement direction of the support beam 3201, and the support beam 3205 and the support beam 3201 may be driven by a same drive block. A movement direction of the support beam 3206 may be the same as a movement direction of the support beam 3204, and the support beam 3206 and the support beam 3204 may be driven by a same drive block.

A movement direction of the mass block 314 and a movement direction of the mass block 311 in the Y-axis direction are reverse. The mass block 314 and the mass block 311 may be close to or away from each other in the Y-axis direction.

FIG. 3B is a schematic diagram of a structure in which the mass block 314 moves along the Y-axis. A dashed line in FIG. 3B shows a location of the mass block 314 before movement, and a solid line in FIG. 3B shows a location of the mass block 314 after movement.

The mechanical structure layer 300 may further include a steering beam 353 and a steering beam 354. In an embodiment, the steering beam 353 and the steering beam 354 may be symmetrical with respect to the symmetry axis y. The steering beam 353 may transfer a translation driving force between the support beam 3205 and one end of the mass block 314, and the steering beam 354 may transfer a translation driving force between the support beam 3206 and the other end of the mass block 314, so that the mass block 314 has a displacement component in the Y-axis direction under driving of the support beam 3205 and the support beam 3206. In addition, the steering beam 353 is further configured to convert a translation driving force along the X-axis from the support beam 3205 into a translation driving force along the Y-axis, and the steering beam 354 is further configured to convert a translation driving force along the X-axis from the support beam 3206 into a translation driving force along the Y-axis, so that the mass block 314 has a displacement component along the Y-axis under an action of the steering beam 353 and the steering beam 354. For related embodiments of the steering beam 353 and the steering beam 354, refer to related embodiments of the steering beam 351 and the steering beam 352.

The mechanical structure layer 300 further includes an anchor 343 and an elastic connector 3304. The anchor 343 and the anchor 341 may be symmetrical with respect to the symmetry axis x. The elastic connector 3304 and the elastic connector 3301 may be symmetrical with respect to the symmetry axis x. The elastic connector 3304 may be connected between the anchor 343 and the mass block 314. The elastic connector 3304 may be configured to provide suspension support along the Z-axis for the mass block 314. The elastic connector 3304 may be further configured to provide buffer space on the Y-axis between the mass block 314 and the anchor 34.

The mechanical structure layer 300 may further include an elastic connector 3305, an elastic connector 3306, and an elastic connector 3307. In an embodiment, the elastic connector 3305 and the elastic connector 3302 may be symmetrical with respect to the symmetry axis y. The elastic connector 3306 and the elastic connector 3302 may be symmetrical with respect to the symmetry axis x. The elastic connector 3307 and the elastic connector 3305 may be symmetrical with respect to the symmetry axis x.

The elastic connector 3305 may have small rigidity or have elasticity in the X-axis direction and the Y-axis direction, so that the support beam 3204 moves along the X-axis, and the mass block 311 moves along the Y-axis. The elastic connector 3306 may have small rigidity or have elasticity in the X-axis direction and the Y-axis direction, so that the support beam 3205 moves along the X-axis, and the mass block 314 moves along the Y-axis. The elastic connector 3307 may have small rigidity or have elasticity in the X-axis direction and the Y-axis direction, so that the support beam 3206 moves along the X-axis, and the mass block 314 moves along the Y-axis.

The mechanical structure layer 300 may further include a support beam 3207. The support beam 3207 is driven to have a displacement component in the X-axis direction. When the inertial sensor is not subject to an external force, the support beam 3207 may move back and forth along the X-axis. A movement direction of the support beam 3207 and a movement direction of the support beam 3202 in the X-axis direction may be reverse. In an embodiment, the support beam 3207 and the support beam 3202 may be symmetrical with respect to the symmetry axis y. In the embodiment shown in FIG. 3A, the support beam 3207 may be connected to the transmission beam 362. The support beam 3207 may move back and forth to drive the mass block 315, so that the mass block 315 is driven to have a displacement component in the X-axis direction.

A movement direction of the mass block 315 and a movement direction of the mass block 312 in the X-axis direction may be reverse. The mass block 315 and the mass block 312 may be close to or away from each other in the X-axis direction. The mass block 315 and the mass block 312 may be driven by different drive blocks. In an embodiment, two drive blocks configured to drive the mass block 315 and the mass block 312 may be further configured to drive the mass block 311.

FIG. 3B is a schematic diagram of a structure in which the mass block 315 moves along the X-axis. A dashed line in FIG. 3B shows a location of the mass block 315 before movement, and a solid line in FIG. 3B shows a location of the mass block 315 after movement.

The mechanical structure layer 300 may further include a support beam 3208, a support beam 3209 and a support beam 3210. In an embodiment, the support beam 3208 and the support beam 3203 may be symmetrical with respect to the symmetry axis x. The support beam 3209 and the support beam 3203 may be symmetrical with respect to the symmetry axis y. The support beam 3210 and the support beam 3208 may be symmetrical with respect to the symmetry axis y.

The support beam 3203 may be connected to a first end of the mass block 313. The support beam 3208 may be connected between the anchor 342 and a second end of the mass block 313. The support beam 3208 and the support beam 3203 are configured to support the mass block 313, so that the mass block 313 is suspended between the substrate layer and the coverage layer shown in FIG. 2. The support beam 3208 and the support beam 3203 may collaboratively provide suspension support along the Z-axis for the mass block 313.

The support beam 3209 may be connected between the anchor 342 and a first end of the mass block 316. The support beam 3210 may be connected between the anchor 342 and a second end of the mass block 316. The support beam 3209 and the support beam 3210 may collaboratively provide suspension support along the Z-axis for the mass block 316.

The mechanical structure layer 300 may further include a transmission beam 363 and a transmission beam 364. The transmission beam 363 may be symmetrical with respect to the symmetry axis y. The transmission beam 364 may be symmetrical with respect to the symmetry axis y. The transmission beam 363 and the transmission beam 364 may be symmetrical with respect to the symmetry axis x. The transmission beam 363 may be connected between the support beam 3203 and the support beam 3208. The transmission beam 363 may be connected between the support beam 3208 and the support beam 3210. The transmission beam 363 may provide suspension support along the Z-axis for the support beam 3203 and the support beam 3209. The transmission beam 364 may provide suspension support along the Z-axis for the support beam 3208 and the support beam 3210.

The mechanical structure layer 300 may further include a symmetrical beam 371 and a symmetrical beam 372. The symmetrical beam 371 and the symmetrical beam 372 may be fastened to two ends of the anchor 342. The symmetrical beam 371 may be connected between the transmission beam 363 and the anchor 342. The symmetrical beam 372 may be connected between the transmission beam 364 and the anchor 342. The symmetrical beam 371 may be symmetrical with respect to the symmetry axis y. The symmetrical beam 372 may be symmetrical with respect to the symmetry axis y. The symmetrical beam 371 and the symmetrical beam 372 may be symmetrical with respect to the symmetry axis x.

The mechanical structure layer 300 further includes an elastic connector 3308, an elastic connector 3309, and an elastic connector 3310. In an embodiment, the elastic connector 3308 and the elastic connector 3303 may be symmetrical with respect to the symmetry axis x. The elastic connector 3309 and the elastic connector 3303 may be symmetrical with respect to the symmetry axis y. The elastic connector 3310 and the elastic connector 3308 may be symmetrical with respect to the symmetry axis y.

The mass block 312 may extend from a first end of the mass block 313 to a second end of the mass block 313. The elastic connector 3303 may be connected between a first end of the mass block 312 and a first end of the mass block 313. The elastic connector 3308 may be connected between a second end of the mass block 312 and a second end of the mass block 313. As shown in FIG. 3A and FIG. 3B, the first end of the mass block 312 and the first end of the mass block 313 may be connected to the support beam 3203 by using the elastic connector 3303. The second end of the mass block 312 and the second end of the mass block 313 may be connected to the support beam 3208 by using the elastic connector 3308.

The elastic connector 3303 may have small rigidity or have elasticity in the X-axis direction, to provide buffer space along the X-axis between the first end of the mass block 312 and the first end of the mass block 313. The elastic connector 3308 may have small rigidity or have elasticity in the X-axis direction, to provide buffer space along the X-axis between the second end of the mass block 312 and the second end of the mass block 313. Therefore, this helps reduce a displacement of the mass block 313 in the X-axis direction.

The mass block 315 may extend from a first end of the mass block 316 to a second end of the mass block 316. The elastic connector 3309 may be connected between a first end of the mass block 315 and a first end of the mass block 316. The elastic connector 3310 may be connected between a second end of the mass block 315 and a second end of the mass block 316. As shown in FIG. 3A and FIG. 3B, the first end of the mass block 315 and the first end of the mass block 316 may be connected to the support beam 3209 by using the elastic connector 3309. The second end of the mass block 315 and the second end of the mass block 316 may be connected to the support beam 3210 by using the elastic connector 3310.

For a specific embodiment of the elastic connector 3309, refer to the specific embodiment of the elastic connector 3303. For a specific embodiment of the elastic connector 3310, refer to the specific embodiment of the elastic connector 3308.

The mass block 312 may pull the mass block 313 by using the elastic connector 3303 and the support beam 3203, so that the mass block 313 has a displacement component in the Y-axis direction. Compared with the embodiment in which the mass block 312 and the mass block 313 are connected only by using the elastic connector 3303, the embodiment in which the elastic connector 3303 and the support beam 3203 are used to connect the mass block 312 and the mass block 313 helps reduce impact on asymmetry of the mechanical structure layer 300 caused by an unstable deformation amount of the elastic connector 3303, and further helps reduce a processing requirement of the mechanical structure layer 300. The support beam 3203 along the Y-axis may have a greater width than the elastic connector 3303.

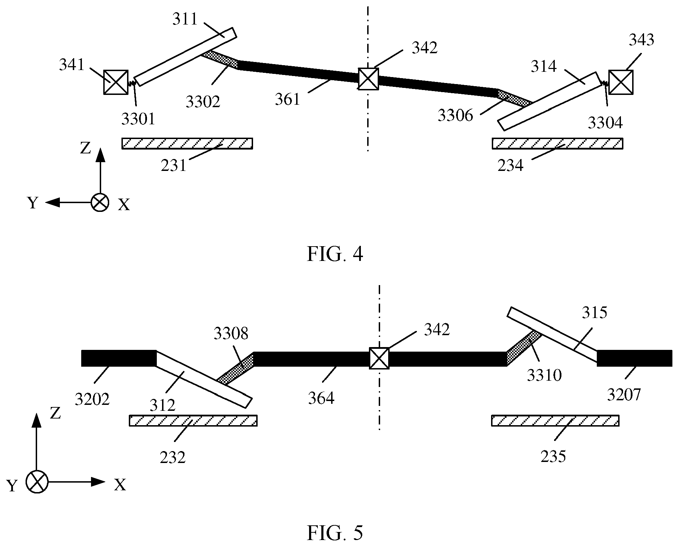

A schematic diagram of a structure shown in FIG. 4 may be obtained by observing the mechanical structure layer 300 shown in FIG. 3B in an X+ direction. With reference to FIG. 3B and FIG. 4, the following describes a principle of detecting an angular velocity around the X-axis by using the mass block 311 and the mass block 314.

The inertial sensor may include a detection electrode 231 and a detection electrode 234. For example, the detection electrode 231 and the detection electrode 234 may be disposed on the substrate layer shown in FIG. 2.

The detection electrode 231 may be disposed opposite to the mass block 311, and the detection electrode 234 may be disposed opposite to the mass block 314. The detection electrode 231 and the mass block 311 may be arranged along the Z-axis. The detection electrode 231 and the mass block 311 may be disposed in parallel to the XY plane, so that the detection electrode 231 and the mass block 311 may form a capacitor 1. The detection electrode 234 and the mass block 314 may be arranged along the Z-axis. The detection electrode 234 and the mass block 314 may be disposed in parallel to the XY plane, so that the detection electrode 234 and the mass block 314 may form a capacitor 4.

The mass block 311 and the mass block 314 each may have a displacement component in the Y-axis direction. When the inertial sensor as a whole has an angular velocity component for rotating around the X-axis under an action of an external force, the mass block 311 and the mass block 314 may be subject to a Coriolis force along the Z-axis. The mass block 311 and the mass block 314 each may have a displacement component in the Z-axis direction. Therefore, a spacing between the mass block 311 and the detection electrode 231 may be changed, and a capacitance value of the capacitor 1 formed by the mass block 311 and the detection electrode 231 may be changed. A spacing between the mass block 314 and the detection electrode 234 may be changed, and a capacitance value of the capacitor 4 formed by the mass block 314 and the detection electrode 234 may be changed. A capacitance value variation of the capacitor 1 formed by the mass block 311 and the detection electrode 231 may correspond to a displacement component of the mass block 311 in the Z-axis direction. A capacitance value variation of the capacitor 4 formed by the mass block 314 and the detection electrode 234 may correspond to a displacement component of the mass block 314 in the Z-axis direction.

In this application, the inertial sensor is rotated by an external force, and the inertial sensor may have angular velocity components around the X-axis direction, the Y-axis direction, and the Z-axis direction. A projection of an angular velocity direction of the inertial sensor in the X-axis direction may be the angular velocity component of the inertial sensor around the X-axis direction. A projection of an angular velocity direction of the inertial sensor in the Y-axis direction may be the angular velocity component of the inertial sensor around the Y-axis direction. A projection of an angular velocity direction of the inertial sensor in the Z-axis direction may be the angular velocity component of the inertial sensor around the Z-axis direction. A vector sum of the angular velocity components of the inertial sensor around the X-axis direction, the Y-axis direction, and the Z-axis direction may be the angular velocity direction of the inertial sensor.

With reference to FIG. 3B and FIG. 4, it is assumed that a driving direction of the mass block 311 is Y+, and a driving direction of the mass block 314 is Y-. Under an action of an external force, the mass block 311 may be around the anchor 341, and has an angular velocity component for rotating around the X-axis. The mass block 314 may be around the anchor 343, and has an angular velocity component for rotating around the X-axis. Therefore, the mass block 311 may have a displacement component in a Z+ direction, and the mass block 314 may have a displacement component in a Z- direction. The mass block 311 tends to be away from the detection electrode 231, and the mass block 314 tends to be close to the detection electrode 234.

Because both detection results of the detection electrode 231 and the detection electrode 234 include common-mode noise, the common-mode noise can be effectively removed relatively by combining the detection results output by the detection electrode 231 and the detection electrode 234. This helps improve temperature drift performance, zero drift performance, and the like of the inertial sensor.

As shown in FIG. 4, the transmission beam 361 is connected between the elastic connector 3302 and the elastic connector 3306. With reference to FIG. 3B, the transmission beam 361 may be connected between the support beam 3201 and the support beam 3205. Because directions of displacement components of the mass block 311 and the mass block 312 in the Z-axis direction are reverse, the transmission beam 361 is used to rotate around the symmetry axis x relative to the anchor 342. Because the elastic connector 3302 and the elastic connector 3306 have a buffer function, a tilt degree of the transmission beam 361 may be small. For example, a tilt angle of the transmission beam 361 relative to the Y-axis may be less than a tilt angle of the elastic connector 3302 relative to the Y-axis.

With reference to FIG. 3B, the drive block may further include a transmission beam 362. The transmission beam 362 and the transmission beam 361 are symmetrical with respect to the symmetry axis y. The transmission beam 362 may be connected between the elastic connector 3305 and the elastic connector 3307. The transmission beam 362 may be used to rotate around the symmetry axis x relative to the anchor 342. Rotation directions of the transmission beam 361 and the transmission beam 362 around the X-axis direction may be reverse. For a specific embodiment of the transmission beam 362, refer to the specific embodiment of the transmission beam 361.

A schematic diagram of a structure shown in FIG. 5 may be obtained by observing the mechanical structure layer 300 shown in FIG. 3B in a Y+ direction. With reference to FIG. 3B and FIG. 5, the following describes a principle of detecting an angular velocity around the Y-axis by using the mass block 312 and the mass block 315.

The inertial sensor may include a detection electrode 232 and a detection electrode 235. For example, the detection electrode 232 and the detection electrode 235 may be disposed on the substrate layer shown in FIG. 2.

The detection electrode 232 may be disposed opposite to the mass block 312, and the detection electrode 235 may be disposed opposite to the mass block 315. The detection electrode 232 and the mass block 312 may be arranged along the Z-axis. The detection electrode 232 and the mass block 312 may be disposed in parallel to the XY plane, so that the detection electrode 232 and the mass block 312 may form a capacitor 2. The detection electrode 235 and the mass block 315 may be arranged along the Z-axis. The detection electrode 235 and the mass block 315 may be disposed in parallel to the XY plane, so that the detection electrode 235 and the mass block 315 may form a capacitor 5.

The mass block 312 and the mass block 315 each may have a displacement component in the X-axis direction. When the inertial sensor as a whole has an angular velocity component for rotating around the Y-axis under an action of an external force, the mass block 312 and the mass block 315 may be subject to a Coriolis force along the Z-axis. The mass block 312 and the mass block 315 each have a displacement component in the Z-axis direction. Therefore, a spacing between the mass block 312 and the detection electrode 232 may be changed, and a capacitance value of the capacitor 2 formed by the mass block 312 and the detection electrode 232 may be changed. A spacing between the mass block 315 and the detection electrode 235 may be changed, and a capacitance value of the capacitor 5 formed by the mass block 315 and the detection electrode 235 may be changed. A capacitance value variation of the capacitor 2 formed by the mass block 312 and the detection electrode 232 may correspond to a displacement component of the mass block 312 in the Z-axis direction. A capacitance value variation of the capacitor 5 formed by the mass block 315 and the detection electrode 235 may correspond to a displacement component of the mass block 315 in the Z-axis direction.

With reference to FIG. 3B and FIG. 5, it is assumed that a driving direction of the mass block 312 is X-, and a driving direction of the mass block 315 is X+. Under an action of an external force, the mass block 312 may be around the anchor 342, and has an angular velocity component for rotating around the Y-axis. The mass block 315 may be around the anchor 342, and has an angular velocity component for rotating around the Y-axis. Therefore, the mass block 312 may have a displacement component in a Z- direction, and the mass block 315 may have a displacement component in a Z+ direction. The mass block 312 tends to be close to the detection electrode 232, and the mass block 315 tends to be away from the detection electrode 235.

Because both detection results of the detection electrode 232 and the detection electrode 235 include common-mode noise, the common-mode noise can be effectively removed relatively by combining the detection results output by the detection electrode 232 and the detection electrode 235. This helps improve temperature drift performance, zero drift performance, and the like of the inertial sensor.

As shown in FIG. 5, the transmission beam 364 is connected between the elastic connector 3308 and the elastic connector 3310. With reference to FIG. 3B, the transmission beam 364 may be connected to the anchor 342. Because directions of displacement components of the mass block 312 and the mass block 315 in the Z-axis direction are reverse, the transmission beam 364 tends to rotate around the symmetry axis y relative to the anchor 342. Because the elastic connector 3308 and the elastic connector 3310 have a buffer function, and the transmission beam 364 is fastened to the anchor 342, a tilt degree of the transmission beam 364 may be small. In other words, the elastic connector 3308 and the elastic connector 3310 may help reduce a tilt degree of the transmission beam 364 relative to the X-axis, and rigidity of the transmission beam 364 may further help reduce the tilt degree of the transmission beam 364 relative to the X-axis. This helps reduce an amount of rotation of the mass block 313 around the Y-axis.

When directions of displacement components of the elastic connector 3308 and the elastic connector 3310 in the X-axis direction are reverse, the transmission beam 364 may further provide a deformation counter force of the elastic connector 3308 and the elastic connector 3310 along the X-axis, to help reduce displacement components of the mass block 313 and the mass block 316 in the X-axis direction.

With reference to FIG. 3B, the drive block may further include a transmission beam 364. The transmission beam 364 and the transmission beam 363 are symmetrical with respect to the symmetry axis x. The transmission beam 364 may be connected between the elastic connector 3303 and the elastic connector 3309. For a specific embodiment of the transmission beam 364, refer to the specific embodiment of the transmission beam 363.

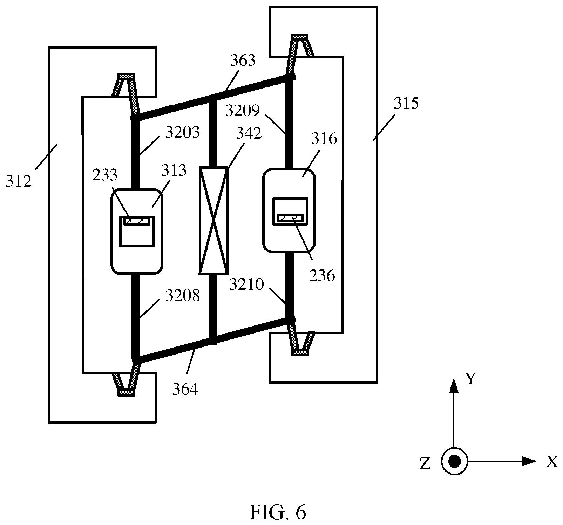

A schematic diagram of a structure shown in FIG. 6 may be obtained by observing a local part of the mechanical structure layer 300 shown in FIG. 3B in a Z- direction. With reference to FIG. 3B and FIG. 6, the following describes a principle of detecting an angular velocity around the Z-axis by using the mass block 312, the mass block 313, the mass block 315, and the mass block 316.

The inertial sensor may include a detection electrode 233 and a detection electrode 236. The detection electrode 233 and the detection electrode 236 may be disposed on the substrate layer shown in FIG. 3, or may be disposed on the mechanical structure layer 300. When the detection electrode 233 and the detection electrode 236 are disposed on the mechanical structure layer 300, the detection electrode 233 and the detection electrode 236 may belong to a stator of the mechanical structure layer 300.

The detection electrode 233 may be disposed opposite to the mass block 313, and the detection electrode 236 may be disposed opposite to the mass block 316. The detection electrode 233 and the mass block 313 may be arranged along the Y-axis. The detection electrode 233 and the mass block 313 may be disposed in parallel to the XZ plane, so that the detection electrode 233 and the mass block 313 may form a capacitor 3. The detection electrode 236 and the mass block 316 may be arranged along the Y-axis. The detection electrode 236 and the mass block 316 may be disposed in parallel to the XZ plane, so that the detection electrode 236 and the mass block 316 may form a capacitor 6.

The mass block 312 and the mass block 315 may be driven to each have a displacement component in the X-axis direction. When the inertial sensor as a whole has an angular velocity component for rotating around the Z-axis under an action of an external force, the mass block 312 and the mass block 315 may be subject to a Coriolis force along the Y-axis. The mass block 312 and the mass block 315 tend to move along the Y-axis. Because the mass block 312 and the mass block 313 are connected by using the support beam 3203 and the support beam 3208, the mass block 313 may have a displacement component in the Y-axis direction under pulling of the mass block 312. Therefore, a spacing between the mass block 313 and the detection electrode 233 may be changed, and a capacitance value of the capacitor 3 formed by the mass block 313 and the detection electrode 233 may be changed. A capacitance value variation of the capacitor 3 formed by the mass block 313 and the detection electrode 233 may correspond to a displacement component of the mass block 313 in the Y-axis direction. Because the mass block 315 and the mass block 316 are connected by using the support beam 3209 and the support beam 3210, the mass block 316 may have a displacement component in the Y-axis direction under pulling of the mass block 315. Therefore, a spacing between the mass block 316 and the detection electrode 236 may be changed, and a capacitance value of the capacitor 6 formed by the mass block 316 and the detection electrode 236 may be changed. A capacitance value variation of the capacitor 6 formed by the mass block 316 and the detection electrode 236 may correspond to a displacement component of the mass block 316 in the Y-axis direction.

With reference to FIG. 3B and FIG. 6, it is assumed that a driving direction of the mass block 312 is X-, and a driving direction of the mass block 315 is X+. Under an action of an external force, the mass block 312 and the mass block 313 may be around the anchor 342, and each may have an angular velocity component for rotating around the Z-axis. The mass block 315 and the mass block 316 may be around the anchor 342, and each may have an angular velocity component for rotating around the Z-axis. Therefore, the mass block 312 and the mass block 313 each may have a displacement component in a Z- direction, and the mass block 315 and the mass block 316 each may have a displacement component in a Z+ direction. For example, the mass block 313 may tend to be close to the detection electrode 233, and for example, the mass block 316 may tend to be away from the detection electrode 236.

One end of the mass block 313 may be connected to one end of the mass block 316 by using the transmission beam 363. The transmission beam 363 may provide a balance force in the X direction, to help reduce displacements of the mass block 313 and the mass block 316 in the X direction. The transmission beam 363 may further provide torsion support of rotating around the Z-axis for the mass block 312 and the mass block 313. Similarly, the other end of the mass block 313 may be connected to the other end of the mass block 316 by using the transmission beam 364. The transmission beam 364 may provide a balance force in the X direction, and a torsion support of rotating around the Z-axis for the mass block 313 and the mass block 316.

Because both detection results of the detection electrode 233 and the detection electrode 236 include common-mode noise, the common-mode noise can be effectively removed relatively by combining the detection results output by the detection electrode 233 and the detection electrode 236. This helps improve temperature drift performance, zero drift performance, and the like of the inertial sensor.

For ease of describing beneficial effects of the solutions provided in embodiments of this application, three decoupling types are first described: mechanical decoupling, principle decoupling, and differential decoupling.

The mechanical decoupling may mean that a part A and a part B are separately arranged, and motion (the motion may include movement driven by a chip and rotation under an action of an external force) of the part A does not affect motion of the part A.

The principle decoupling may mean that the part A and the part B are not separately arranged, the part A detects a capacitance change in a direction of an axis a, the part B does not move on the axis a, or a movement amount of the part B on the axis a may be ignored. In other words, resonance of the part B does not affect detection of the part A. The principle decoupling is to avoid or reduce impact between the two parts from the perspective of a detection principle.

The differential decoupling may mean that the part A and the part B are symmetrical, and motion modes of the part A and the part B belong to differential motion. The differential motion of the symmetrical structures can help eliminate common-mode impact, to reduce impact between the part A and the part B. The differential decoupling strongly depends on symmetry, and has a high processing requirement on the inertial sensor.

The following describes a decoupling mode between parts of the mechanical structure layer 300 provided in embodiments of this application with reference to the foregoing term explanation.

The mass block 311 may have a displacement component in the Y-axis direction under an action of the drive block, and a detection direction is the Z-axis direction. Therefore, a decoupling mode of the mass block 311 and the drive block may be principle decoupling. The mass block 312 may have a displacement component in the X-axis direction under an action of the drive block, and a detection direction is the Z-axis direction. Therefore, a decoupling mode of the mass block 312 and the drive block may be principle decoupling. The mass block 313 and the drive block may be considered to be disposed independently, that is, the mass block 313 may be approximately considered not to move under an action of the drive block. Therefore, a decoupling mode of the mass block 313 and the drive block may be mechanical decoupling.

Motion of the mass block 311 and motion of the mass block 312 do not interfere with each other. Therefore, a decoupling mode of the mass block 311 and the mass block 312 may be mechanical decoupling. Motion of the mass block 311 and motion of the mass block 313 do not interfere with each other. Therefore, a decoupling mode of the mass block 311 and the mass block 313 may be mechanical decoupling.

When a Y-axis angular velocity is detected by using the mass block 312, a detection direction of the mass block 312 is the Z-axis direction, and the mass block 313 may not move in the Z-axis direction. Therefore, from this perspective, a decoupling mode of the mass block 312 and the mass block 313 may be mechanical decoupling. When a Z-axis angular velocity is detected by using the mass block 313, a detection direction of the mass block 313 is the Y-axis direction, the mass block 312 may have a displacement component in the Y-axis direction, and the detection direction of the mass block 312 is the Z-axis direction. Therefore, from this perspective, a decoupling mode of the mass block 313 and the mass block 312 may be principle decoupling.

Table 1 shows a decoupling mode of the mechanical structure layer 300 shown in FIG. 3A.

**Table 1**

| Decoupling mode | Drive block | Mass block 311 | Mass block 312 | Mass block 313 |
|---|---|---|---|---|
| Mass block 311 | Principle decoupling | / | Mechanical decoupling | Mechanical decoupling |
| Mass block 312 | Principle decoupling | Mechanical decoupling | / | Principle decoupling |
| Mass block 313 | Mechanical decoupling | Mechanical decoupling | Mechanical decoupling | / |

The mechanical structure layer provided in embodiments of this application can reduce application of the differential decoupling mode, helps reduce a processing precision requirement of the inertial sensor, and further helps improve detection precision of the inertial sensor. Because the inertial sensor may be coaxially driven, it is helpful to reduce a quantity of drive blocks in the inertial sensor, improve integration of the inertial sensor, and further help reduce a size of the inertial sensor.

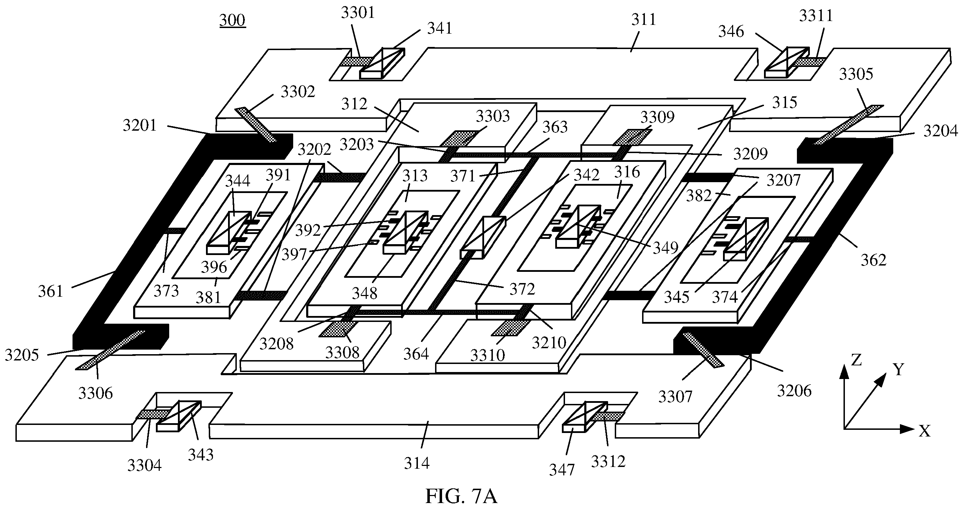

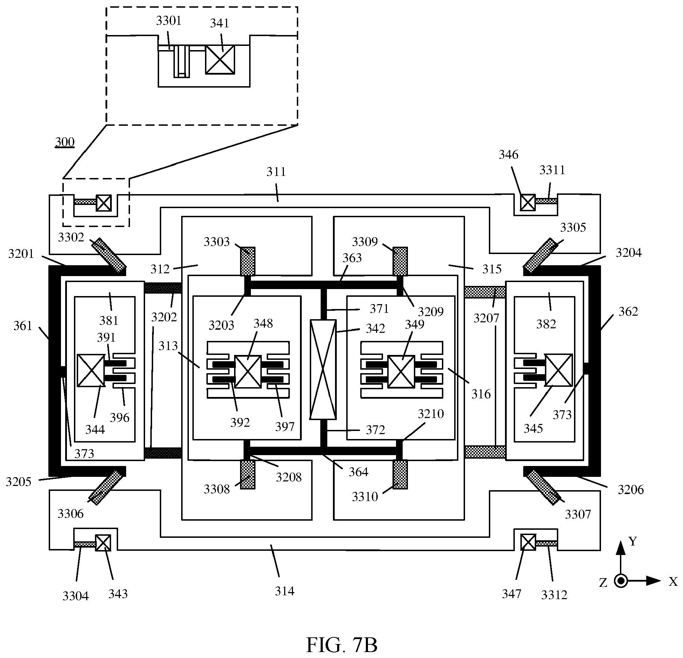

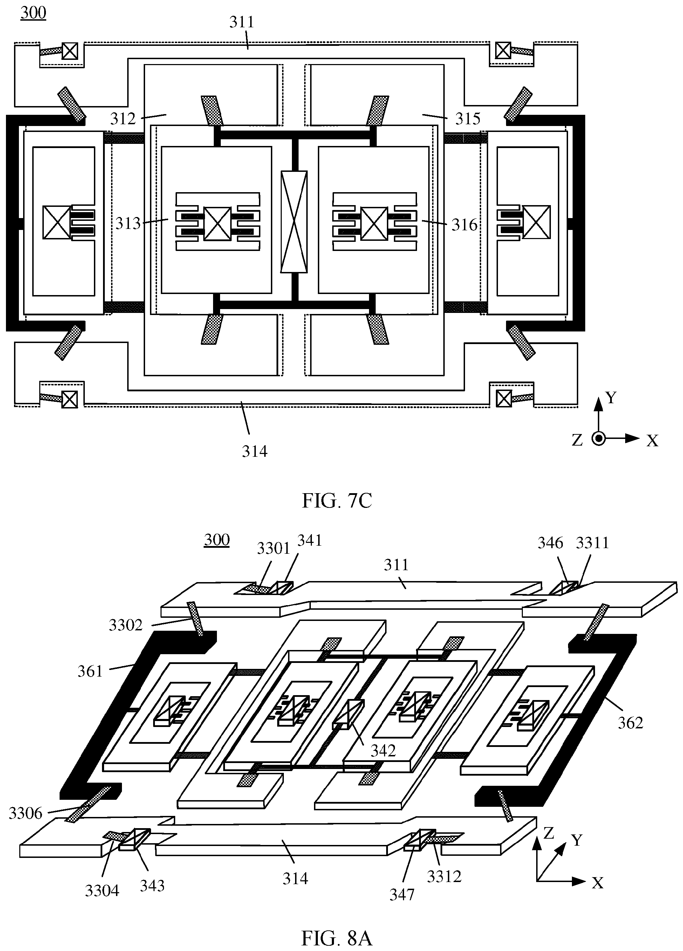

FIG. 7A is a three-dimensional diagram of another mechanical structure layer 300 according to an embodiment of this application. A plan view shown in FIG. 7B may be obtained by observing the mechanical structure layer 300 in a Z-direction shown in FIG. 7A. FIG. 7C is a schematic diagram of motion of a rotor of the mechanical structure layer 300 shown in FIG. 7B when the mechanical structure layer 300 is not rotated. For ease of description, as shown in FIG. 7A, FIG. 7B, and FIG. 7C, it is assumed that an XYZ coordinate system exists, where an X-axis, a Y-axis, and a Z-axis are orthogonal to each other. The mechanical structure layer 300 may be disposed in parallel relative to an XY plane.

Similar to the embodiments shown in FIG. 3A to FIG. 6, in the embodiments shown in FIG. 7A to FIG. 7C, the mechanical structure layer 300 may include an anchor 341, an anchor 342, an anchor 343, a mass block 311, a mass block 312, a mass block 313, a mass block 314, a mass block 315, a mass block 316, a support beam 3201, a support beam 3202, a support beam 3203, a support beam 3204, a support beam 3205, a support beam 3206, a support beam 3207, a support beam 3208, a support beam 3209, a support beam 3210, an elastic connector 3301, an elastic connector 3302, an elastic connector 3303, an elastic connector 3304, an elastic connector 3305, an elastic connector 3306, an elastic connector 3307, an elastic connector 3308, an elastic connector 3309, an elastic connector 3310, a transmission beam 361, a transmission beam 362, a transmission beam 363, and a transmission beam 364. The mass block 311, the mass block 312, the mass block 313, the mass block 314, the mass block 315, and the mass block 316 of the mechanical structure layer 300 may form a capacitor 1, a capacitor 2, a capacitor 3, a capacitor 4, a capacitor 5, and a capacitor 6 respectively with a detection electrode 231, a detection electrode 232, a detection electrode 233, a detection electrode 234, a detection electrode 235, and a detection electrode 236 of an inertial sensor, to detect an angular velocity around the X-axis by using the capacitor 1 and the capacitor 4, detect an angular velocity around the Y-axis by using the capacitor 2 and the capacitor 5, and detect an angular velocity around the Z-axis by using the capacitor 3 and the capacitor 6.

The mechanical structure layer 300 may further include an anchor 344 and a drive block 381. The anchor 344 may belong to a stator of the mechanical structure layer 300. The drive block 381 may belong to a rotor of the mechanical structure layer 300. The drive block 381 can move along the X-axis relative to the anchor 344.

In an embodiment, the mechanical structure layer 300 may further include a fixed comb 39291 and a movable comb 396. The fixed comb 39291 may be fastened to the anchor 344. The movable comb may be fastened to the drive block 381. The fixed comb 39291 and the movable comb 396 may be disposed crosswise at an interval.

In this application, the fixed comb may belong to the stator of the mechanical structure layer 300, and the movable comb may belong to the rotor of the mechanical structure layer 300. The fixed comb may include a plurality of fixed comb fingers, and the movable comb may include a plurality of movable comb fingers. That the fixed comb and the movable comb are disposed crosswise at an interval may mean that there is one movable comb finger between two adjacent fixed comb fingers, there is one fixed comb finger between two adjacent movable comb fingers, and the fixed comb finger and movable comb finger that are adjacent to each other are disposed at an interval.

By supplying an alternating current to the drive block 381 and the anchor 344, an interaction force between the movable comb 396 and the fixed comb 39291 may drive the movable comb 396 to move along the X-axis relative to the fixed comb 39291, so that the drive block 381 moves along the X-axis relative to the anchor 344. Displacements of the drive block 381 in a Y-axis direction and a Z-axis direction may be small or even ignored. For example, the drive block 381 may be attached to a substrate layer or the anchor 34, and is limited to moving along the X-axis.

The mechanical structure layer 300 may further include an anchor 345 and a drive block 382. The anchor 345 and the anchor 344 may be symmetrical with respect to a symmetrical beam 371 or a symmetrical beam 372. The drive block 381 and the drive block 382 may be symmetrical with respect to the symmetrical beam 371 or the symmetrical beam 372. The drive block 382 can move along the X-axis relative to the anchor 345. A moving direction of the drive block 382 may be reverse to a moving direction of the drive block 381. For a specific embodiment of the drive block 382, refer to the specific embodiment of the drive block 381, and for a specific embodiment of the anchor 345, refer to the specific embodiment of the anchor 344.

The mechanical structure layer 300 may further include a symmetrical beam 373. The symmetrical beam 373 may be symmetrical with respect to the symmetry axis x shown in FIG. 3A. The symmetrical beam 373 may be connected to a side that is of the drive block 381 and that is away from the drive block 382. The symmetrical beam 373 may extend in the X-axis direction. The drive block 381 may be symmetrical with respect to the symmetrical beam 373. The anchor 344 may be symmetrical with respect to the symmetrical beam 373.

An end that is of the symmetrical beam 373 and that is away from the drive block 381 may be connected to the transmission beam 361. The transmission beam 361 may extend in the Y-axis direction. Therefore, the drive block 381 may drive the transmission beam 361 by using the symmetrical beam 373, so that the transmission beam 361 has a displacement component in the X-axis direction. Two ends of the transmission beam 361 are respectively connected to the support beam 3201 and the support beam 3205. The support beam 3201 and the support beam 3205 each have a displacement component in the X-axis direction under an action of the transmission beam 361.

An end that is of the support beam 3201 and that is away from the transmission beam 361 is connected to a first end of the mass block 311 by using a steering beam and the elastic connector 3302, and the first end of the mass block 311 may be driven, to have a displacement component in the Y-axis direction.

On a side that is of the mass block 311 and that is away from the mass block 314, the anchor 341 and the elastic connector 3301 are disposed close to the first end of the mass block 311. The elastic connector 3301 is connected between the first end of the mass block 311 and the anchor 341. The elastic connector 3301 may provide buffer space in the Y-axis direction for the mass block 311. In addition, the elastic connector 3301 may further provide support in a Z direction for the mass block 311. In other words, rigidity of the elastic connector 3301 along the Z-axis may be large, and rigidity of the elastic connector 3301 along the Y-axis may be small.

In an embodiment, as shown in a local schematic diagram of FIG. 7B, the elastic connector 3301 may further provide buffer space in the X-axis direction for the mass block 311. A pull force of a displacement component of the mass block 311 in the X-axis direction on the anchor 341 may be small. This helps reduce stress effect of the displacement component of the mass block 311 in the X-axis direction on the substrate layer.

Based on a simulation result, the anchor 341 is disposed at an end of the mass block 311, and is softly connected to the mass block 311 in at least one direction (that is, the elastic connector 3301 has elasticity in at least one direction), so that an interference mode of the mechanical structure layer 300 can be adjusted. In this way, an effective mode of the mechanical structure layer 300 can be away from the interference mode of the mechanical structure layer 300.

The mechanical structure layer 300 may further include an anchor 346 and an elastic connector 3311. The anchor 346 and the anchor 341 may be symmetrical with respect to the symmetrical beam 371. The elastic connector 3311 and the elastic connector 3301 may be symmetrical with respect to the symmetrical beam 371. The anchor 346 and the elastic connector 3301 are disposed on a side that is of the mass block 311 and that is away from the mass block 314, and are close to a second end of the mass block 311. The elastic connector 3311 is connected between the second end of the mass block 314 and the anchor 346. For a specific embodiment of the elastic connector 3311, refer to the specific embodiment of the elastic connector 3301. For a specific embodiment of the anchor 346, refer to the specific embodiment of the anchor 341.

An end that is of the support beam 3205 and that is away from the transmission beam 361 is connected to a first end of the mass block 314 by using a steering beam and the elastic connector 3306, and the first end of the mass block 314 may be driven, so that the mass block 314 has a displacement component in the Y-axis direction. A displacement component of the first end of the mass block 311 may be reverse to a displacement component of the first end of the mass block 314 in direction.

On a side that is of the mass block 314 and that is away from the mass block 311, the anchor 343 and the elastic connector 3304 are disposed close to the first end of the mass block 314. The elastic connector 3304 is connected between the first end of the mass block 314 and the anchor 343. For a specific embodiment of the elastic connector 3304, refer to the specific embodiment of the elastic connector 3301.

The mechanical structure layer 300 may further include a symmetrical beam 374. The symmetrical beam 374 may be symmetrical with respect to the symmetry axis x shown in FIG. 3A. The symmetrical beam 374 and the symmetrical beam 373 may be symmetrical with respect to the symmetrical beam 371 or the symmetrical beam 372. The symmetrical beam 374 may be connected to a side that is of the drive block 382 and that is away from the drive block 381. For a specific embodiment of the symmetrical beam 374, refer to the specific embodiment of the symmetrical beam 371.

The anchor 345 may be symmetrical with respect to the symmetrical beam 374. The drive block 382 may be symmetrical with respect to the symmetrical beam 374. An end that is of the symmetrical beam 374 and that is away from the drive block 382 may be connected to the transmission beam 362. Therefore, the drive block 382 may drive the transmission beam 362 by using the symmetrical beam 374, so that the drive beam 362 has a displacement component in the X-axis direction. A displacement component of the transmission beam 362 may be reverse to a displacement component of the transmission beam 361 in direction. Two ends of the transmission beam 362 are respectively connected to the support beam 3204 and the support beam 3206. The support beam 3204 and the support beam 3206 each may have a displacement component in the X-axis direction under an action of the transmission beam 362. For a specific embodiment of the transmission beam 362, refer to the specific embodiment of the transmission beam 361.

An end that is of the support beam 3204 and that is away from the transmission beam 362 is connected to a second end of the mass block 311 by using a steering beam and the elastic connector 3305, and the second end of the mass block 311 may be driven, to have a displacement component in the Y-axis direction.

An end that is of the support beam 3206 and that is away from the transmission beam 362 is connected to a second end of the mass block 314 by using a steering beam and the elastic connector 3307, and the second end of the mass block 314 may be driven, to have a displacement component in the Y-axis direction. A displacement component of the second end of the mass block 311 may be reverse to a displacement component of the second end of the mass block 314 in direction.

The mechanical structure layer 300 may further include an anchor 347 and an elastic connector 3312. The anchor 347 and the anchor 343 may be symmetrical with respect to the symmetrical beam 372. The elastic connector 3312 and the elastic connector 3304 may be symmetrical with respect to the symmetrical beam 372. The anchor 347 and the anchor 346 may be symmetrical with respect to the symmetrical beam 374. The elastic connector 3312 and the elastic connector 3311 may be symmetrical with respect to the symmetrical beam 374. The anchor 347 and the elastic connector 3312 are disposed on a side that is of the mass block 314 and that is away from the mass block 311, and are close to the second end of the mass block 314. The elastic connector 3312 is connected between the second end of the mass block 314 and the anchor 347. For a specific embodiment of the elastic connector 3312, refer to the specific embodiment of the elastic connector 3311 or the elastic connector 3304. For a specific embodiment of the anchor 347, refer to the specific embodiment of the anchor 346 or the anchor 343.

FIG. 7C is a schematic diagram of a structure in which the mass block 311 and the mass block 314 move along a Y-axis in reverse directions. Dashed lines in FIG. 7C show locations of the mass block 311 and the mass block 314 before movement, and solid lines in FIG. 7C show locations of the mass block 311 and the mass block 314 after movement.

The mechanical structure layer 300 may further include a plurality of support beams 3202. The plurality of support beams 3202 may be symmetrical with respect to the symmetrical beam 373.

A side that is of the drive block 381 and that is close to the drive block 382 may be connected to the support beam 3202. One support beam 3202 may be connected to an end that is of the drive block 381 and that is close to the mass block 311, and another support beam 3202 may be connected to an end that is of the drive block 381 and that is close to the mass block 314. An end that is of one support beam 3202 and that is away from the drive block 381 may be connected to an end that is of the mass block 312 and that is close to the mass block 311. An end that is of the other support beam 3202 and that is away from the drive block 381 may be connected to an end that is of the mass block 312 and that is close to the mass block 314. The drive block 381 may be configured to drive the mass block 312 by using the support beam 3202, so that the mass block 312 has a displacement component in an X-axis direction.

The mechanical structure layer 300 may further include a plurality of support beams 3207. The plurality of support beams 3207 may be symmetrical with respect to the symmetrical beam 374. The plurality of support beams 3202 and the plurality of support beams 3207 may be symmetrical with respect to the symmetrical beam 372.

A side that is of the drive block 382 and that is close to the drive block 381 may be connected to the support beam 3207. A side that is of the support beam 3207 and that is away from the drive block 382 may be connected to the mass block 315. The drive block 382 may be configured to drive the mass block 315 by using the support beam 3207, so that the mass block 315 has a displacement component in the X-axis direction. A displacement component of the mass block 315 in the X-axis direction may be reverse to a displacement component of the mass block 312 in the X-axis direction in direction. A displacement component of the support beam 3207 in the X-axis direction may be reverse to a displacement component of the support beam 3202 in the X-axis direction in direction. For a specific embodiment of the support beam 3207, refer to the specific embodiment of the support beam 3202.

FIG. 7C is a schematic diagram of a structure in which the mass block 312 and the mass block 315 move along an X-axis in reverse directions. Dashed lines in FIG. 7C show locations of the mass block 312 and the mass block 315 before movement, and solid lines in FIG. 7C show locations of the mass block 312 and the mass block 315 after movement.

The mechanical structure layer 300 may further include an anchor 348. The anchor 348 may be symmetrical with respect to the symmetrical beam 373. A fixed comb 392 is fastened to the anchor 348. A movable comb 397 is fastened to the mass block 313. The fixed comb 392 may be symmetrical with respect to the symmetrical beam 373. The movable comb 397 may be symmetrical with respect to the symmetrical beam 373. The fixed comb 392 and the movable comb 397 are disposed crosswise at an interval. A detection electrode is disposed on the fixed comb 392. The movable comb 397 and the detection electrode can form a capacitor. An angular velocity component of the mass block 313 around a Z-axis may be determined by detecting a capacitance value variation of the capacitor formed by the movable comb 397 and the detection electrode.

The mechanical structure layer 300 may further include an anchor 349. The anchor 349 may be symmetrical with respect to the symmetrical beam 374. The anchor 348 and the anchor 349 may be symmetrical with respect to a symmetrical beam 371 or a symmetrical beam 372. The mass block 316 and a detection electrode on the anchor 349 may form a capacitor. An angular velocity component of the mass block 316 around the Z-axis may be determined by detecting a capacitance value variation of the capacitor. For a specific embodiment of the anchor 349, refer to the specific embodiment of the anchor 348. For a specific embodiment of the mass block 316, refer to the specific embodiment of the mass block 313.

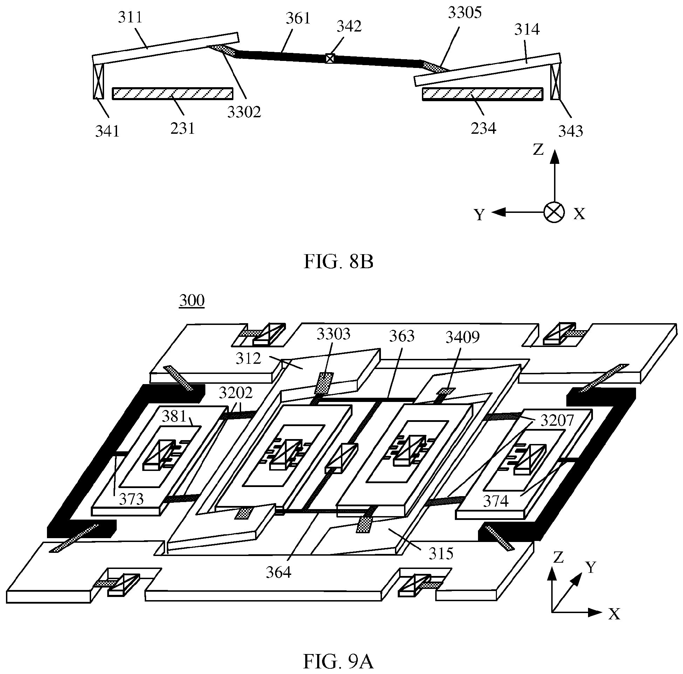

FIG. 8A is a structural diagram of a structure of the mechanical structure layer 300 for detecting an angular velocity around an X-axis. A schematic diagram of a structure shown in FIG. 8B may be obtained by observing the mechanical structure layer 300 shown in FIG. 8A in an X+ direction. With reference to FIG. 8A and FIG. 8B, the following describes a principle of detecting an angular velocity around the X-axis by using the mass block 311 and the mass block 314.

As described above, when an inertial sensor has an angular velocity component for rotating around the X-axis, the mass block 311 and the mass block 314 each have a displacement component in a Z-axis direction, and the displacement components of the mass block 311 and the mass block 314 in the Z-axis direction are reverse in direction. It is assumed that the mass block 311 may have a displacement component in a Z+ direction, and the mass block 314 may have a displacement component in a Z- direction. The mass block 311 tends to be away from the detection electrode 231, and the mass block 314 tends to be close to the detection electrode 234.

Because the mass block 311 may be connected to the anchor 341 by using the elastic connector 3301, the other end of the mass block 311 may be connected to the anchor 346 by using the elastic connector 3311. A side that is of the mass block 311 and that is close to the anchor 341 and the anchor 346 has a small displacement in the Z-axis direction, and a side that is of the mass block 311 and that is away from the anchor 341 and the anchor 346 has a large displacement in the Z-axis direction. The mass block 311 may tilt towards a first direction relative to a Y-axis. Similarly, the mass block 314 may tilt towards a second direction relative to the Y-axis, and the first direction is reverse to the second direction. In other words, the mass block 311 and the mass block 314 each may have an angular velocity component for rotating around the X-axis, and directions of the angular velocity components of the mass block 311 and the mass block 314 for rotating around the X-axis may be reverse. The elastic connector 3301 and the elastic connector 3311 may provide torsion support for the mass block 311 to rotate around the Y-axis. The elastic connector 3304 and the elastic connector 3312 may provide torsion support for the mass block 314 to rotate around the Y-axis.

Under pulling of the mass block 311 and the mass block 314, the transmission beam 361 tends to rotate around the symmetrical beam 371. The elastic connector 3302 may be connected between the transmission beam 361 and the mass block 311. Because rigidity of the transmission beam 361 may be greater than that of the elastic connector 3302, elasticity of the elastic connector 3302 in the Z-axis direction may be large, to provide buffer space in the Z-axis direction for the mass block 311. A tilt angle of the elastic connector 3302 relative to the Y-axis may be greater than a tilt angle of the transmission beam 361 relative to the Y-axis. In an embodiment, a tilt angle of the mass block 311 relative to the Y-axis may be greater than a tilt angle of the transmission beam 361 relative to the Y-axis. In other words, a rotation angle of the transmission beam 361 around the X-axis is less than a rotation angle of the mass block 311 around the X-axis.

A width of the elastic connector 3302 in the Y-axis direction may be less than a width of the mass block 311 in the Y-axis direction. A tilt angle of each of the elastic connector 3302 and the elastic connector 3306 relative to the Y-axis may be greater than the tilt angle of the mass block 311 relative to the Y-axis.

Similarly, the tilt angle of the elastic connector 3306 relative to the Y-axis may be greater than the tilt angle of the transmission beam 361 relative to the Y-axis. For a specific embodiment of the elastic connector 3306, refer to the specific embodiment of the elastic connector 3302. For specific embodiments of the transmission beam 362 and the elastic connector connected to the transmission beam 362, refer to the specific embodiments of the transmission beam 361 and the elastic connector connected to the transmission beam 361.

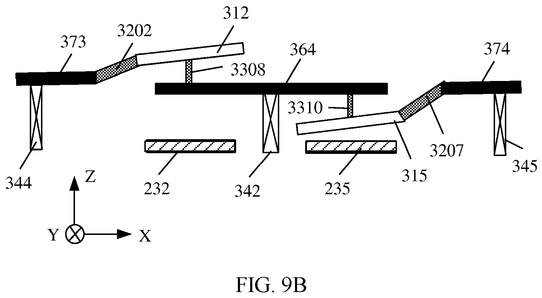

FIG. 9A is a structural diagram of a structure of the mechanical structure layer 300 for detecting an angular velocity around a Y-axis. A schematic diagram of a structure shown in FIG. 9B may be obtained by observing the mechanical structure layer 300 shown in FIG. 9A in a Y+ direction. With reference to FIG. 9A and FIG. 9B, the following describes a principle of detecting an angular velocity around the Y-axis by using the mass block 312 and the mass block 315.

As described above, when an inertial sensor has an angular velocity component for rotating around the Y-axis, the mass block 312 and the mass block 315 each have a displacement component in a Z-axis direction, and the displacement components of the mass block 312 and the mass block 315 in the Z-axis direction are reverse in direction. It is assumed that the mass block 312 may have a displacement component in a Z+ direction, and the mass block 315 may have a displacement component in a Z- direction. The mass block 312 tends to be away from the detection electrode 232, and the mass block 315 tends to be close to the detection electrode 235.

Because the mass block 312 may be connected to the drive block 381 by using the support beam 3202, the drive block 381 may not move in the Z-axis direction. A side that is of the mass block 312 and that is close to the drive block 381 has a small displacement in the Z-axis direction, and a side that is of the mass block 312 and that is away from the drive block 381 has a large displacement in the Z-axis direction. The mass block 312 may tilt towards a first direction relative to an X-axis. Similarly, the mass block 315 may tilt towards a second direction relative to the X-axis, and the first direction is reverse to the second direction. In other words, the mass block 312 and the mass block 315 each may have an angular velocity component for rotating around the Y-axis. Directions of the angular velocity components of the mass block 312 and the mass block 315 for rotating around the Y-axis may be reverse.

The elastic connector 3303 may be connected between the transmission beam 363 and the mass block 312. The elastic connector 3303 may stretch out and draw back in the Z-axis direction, to reduce a displacement component of the transmission beam 363 in the Z-axis direction, provide buffer space in the Z-axis direction and torsion rigidity for rotating around the Y-axis for the mass block 312, and reduce impact of the mass block 312 and the mass block 315 on the transmission beam 363. The transmission beam 363 may further absorb a part of torque for rotating around the Y-axis, to reduce displacements of the mass block 313 and the mass block 316 along a Z-axis. Rigidity of the transmission beam 363 may be greater than that of the elastic connector 3303, and a tilt angle of the elastic connector 3303 relative to the X-axis may be greater than a tilt angle of the transmission beam 363 relative to the X-axis. In an embodiment, a tilt angle of the mass block 312 relative to the X-axis may be greater than the tilt angle of the transmission beam 363 relative to the X-axis. In other words, a rotation angle of the transmission beam 363 around the Y-axis is less than a rotation angle of the mass block 312 around the Y-axis.

A width of the elastic connector 3303 in the X-axis direction may be less than a width of the mass block 312 in the X-axis direction. The tilt angle of the elastic connector 3303 relative to the X-axis may be greater than the tilt angle of the mass block 312 relative to the X-axis.

Similarly, a tilt angle of the elastic connector 3309 relative to the X-axis may be greater than the tilt angle of the transmission beam 363 relative to the X-axis. For a specific embodiment of the elastic connector 3309, refer to the specific embodiment of the elastic connector 3303. For specific embodiments of the transmission beam 364 and the elastic connector connected to the transmission beam 364, refer to the specific embodiments of the transmission beam 363 and the elastic connector connected to the transmission beam 363.

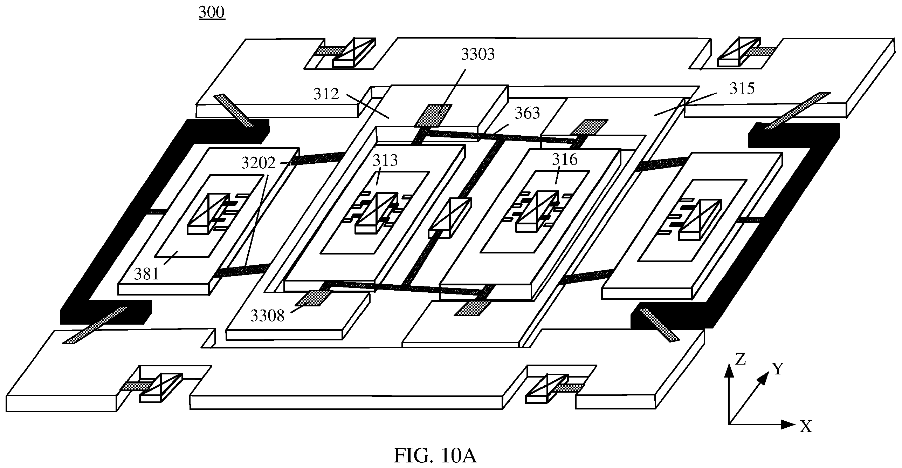

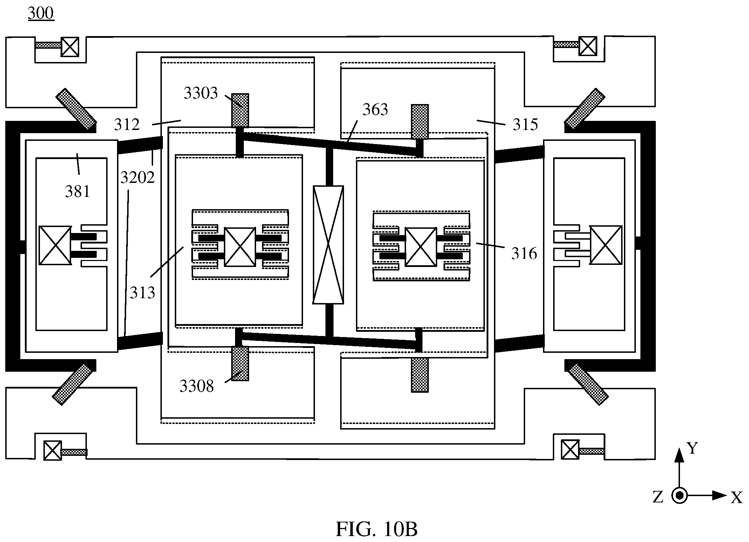

FIG. 10A is a structural diagram of a structure of the mechanical structure layer 300 for detecting an angular velocity around a Z-axis A schematic diagram of a structure shown in FIG. 10B may be obtained by observing the mechanical structure layer 300 shown in FIG. 10A in a Y+ direction. With reference to FIG. 10A and FIG. 10B, the following describes a principle of detecting an angular velocity around a Z-axis by using the mass block 313 and the mass block 316.

As described above, when an inertial sensor has an angular velocity component for rotating around the Z-axis, the mass block 312 and the mass block 315 each have a displacement component in a Y-axis direction, and directions of the displacement components of the mass block 312 and the mass block 315 in the Y-axis direction are reverse, to drive the mass block 313 and the mass block 316 to have displacement components in the Y-axis direction, and directions of the displacement components of the mass block 313 and the mass block 316 in the Y-axis direction are reverse. It is assumed that the mass block 313 may have a displacement component in a Y+ direction, and the mass block 316 may have a displacement component in a Y- direction. The mass block 313 tends to be away from a detection electrode, and the mass block 316 tends to be close to the detection electrode.

Because the mass block 312 may be connected to the drive block 381 by using the support beam 3202, the drive block 381 may not move in the Y-axis direction. A side that is of the mass block 312 and that is close to the drive block 381 has a small displacement in the Y-axis direction, and a side that is of the mass block 312 and that is away from the drive block 381 has a large displacement in the Y-axis direction. The mass block 312 may tilt towards a first direction relative to an X-axis. Similarly, the mass block 315 may tilt towards a second direction relative to the X-axis, and the first direction is reverse to the second direction. In other words, the mass block 312 and the mass block 315 each may have an angular velocity component for rotating around a Z-axis, and directions of the angular velocity components of the mass block 312 and the mass block 315 for rotating around the Z-axis may be reverse. The transmission beam 363 may provide torsion support of rotating around the Z-axis for the mass block 313 and the mass block 316.

The mass block 312 may extend from one end of the mass block 313 to the other end of the mass block 313. The elastic connector 3303 may be connected between one end of the mass block 312 and one end of the mass block 313. The elastic connector 3308 may be connected between the other end of the mass block 312 and the other end of the mass block 313.

The elastic connector 3303 and the elastic connector 3308 may stretch outer and draw back in the Y-axis direction, and elastic forces of the elastic connector 3303 and the elastic connector 3308 may counteract each other, so that the mass block 313 may have a displacement component that is along the Y-axis and that faces the first direction for following the mass block 312. The elastic connector 3303 and the elastic connector 3308 may have elasticity in the Y-axis direction, to reduce a displacement component of the mass block 313 in the Y-axis direction, and provide buffer space in the Y-axis direction for the mass block 312. A displacement component of the mass block 312 along the Y-axis may be greater than a displacement component of the mass block 313 along the Y-axis. Similarly, a displacement component of the mass block 315 along the Y-axis may be greater than a displacement component of the mass block 316 along the Y-axis.

In an embodiment, a width of the support beam 3203 in the X-axis direction may be less than a width of the mass block 312 in the X-axis direction. A tilt angle of the support beam 3202 relative to the X-axis may be greater than a tilt angle of the mass block 312 relative to the X-axis.

In another embodiment, the width of the support beam 3202 in the X-axis direction may be less than a half of the width of the transmission beam 363 in the X-axis direction. The tilt angle of the support beam 3202 relative to the X-axis may be greater than a tilt angle of the transmission beam 363 relative to the X-axis.

For a specific embodiment of another support beam symmetrically disposed with the support beam 3202, refer to the specific embodiment of the support beam 3202.

In embodiments of this application, a natural frequency modal of the inertial sensor is adjusted by using, for example, a rigidity design or a decoupling mode design, so that an effective modal of the inertial sensor can be away from an interference modal of the inertial sensor as far as possible. This improves filtering effect of the inertial sensor and reduces a noise level of the inertial sensor. Further, by adjusting a detection frequency and a drive frequency of the inertial sensor, sensitivity of the inertial sensor is improved.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An inertial sensor (20), comprising:

   a first mass block (312) and a first detection electrode (232), wherein the first mass block (312) can move relative to the first detection electrode (232), the first mass block (312) and the first detection electrode (232) are arranged in a first direction (Z) to form a first capacitor, and the first capacitor is configured to detect an angular velocity around a second direction (Y);
   a second mass block (313) and a second detection electrode (233), wherein the second mass block (313) can move relative to the second detection electrode (233), the second mass block (313) and the second detection electrode (233) are arranged in the second direction (Y) to form a second capacitor, and the second capacitor is configured to detect an angular velocity around the first direction (Z); and
   a first connector (3203+3303), wherein the first connector (3203+3303) is connected between a first end of the first mass block (312) and a first end of the second mass block (313), wherein
   the first mass block (312) is driven to have a displacement component in a third direction (X), and the first direction (Z), the second direction (Y), and the third direction (X) are orthogonal to each other;
   when the first mass block (312) has an angular velocity component around the first direction (Z), the first mass block (312) has a displacement component in the second direction (Y), the first mass block (312) is configured to pull, by using the first connector (3203+3303), the second mass block (313) to move in the second direction (Y), and a displacement component of the second mass block (313) in the second direction (Y) corresponds to a capacitance value variation of the second capacitor; and
   when the first mass block (312) has an angular velocity component around the second direction (Y), the first mass block (312) has a displacement component in the first direction (Z), and the displacement component of the first mass block (312) in the first direction (Z) corresponds to a capacitance value variation of the first capacitor; **characterized in that** the first connector (3203+3303) comprises a first elastic connector (3303), and the first elastic connector (3303) is configured to provide buffer space in the first direction (Z) and the third direction (X) for the first mass block (312), so that a displacement component of the first end of the second mass block (313) in the first direction (Z) is less than a displacement component of the first end of the first mass block (312) in the first direction (Z), and a displacement component of the first end of the second mass block (313) in the third direction (X) is less than a displacement component of the first end of the first mass block (312) in the third direction (X).

2. The inertial sensor (20) according to claim 1, wherein the first connector (3203+3303) further comprises:
   a first support beam (3203), wherein the first support beam (3203) is connected between the first elastic connector (3303) and the second mass block (313).

3. The inertial sensor (20) according to claim 1 or 2, wherein the first connector (3203+3303) further comprises:
   a first transmission beam (363), wherein the first transmission beam (363) extends in the third direction (X), an end of the first transmission beam (363) is connected between the first elastic connector (3303) and the second mass block (313), and when the first mass block (312) has the angular velocity component around the first direction (Z), the first transmission beam (363) rotates around the first direction (Z).

4. The inertial sensor (20) according to claim 3, wherein when the first mass block (312) has the angular velocity component around the second direction (Y), a rotation angle of the first transmission beam (363) around the second direction (Y) is less than a rotation angle of the first mass block (312) around the second direction (Y).

5. The inertial sensor (20) according to any one of claims 1 to 4, wherein the first mass block (312) extends from the first end of the second mass block (313) to a second end of the second mass block (313), and the inertial sensor (20) further comprises:
   a second connector (3208+3308), wherein the second connector (3208+3308) is connected between a second end of the first mass block (312) and the second end of the second mass block (313), and the second connector (3208+3308) and the first connector (3203+3303) are symmetrical with respect to the second mass block (313).

6. The inertial sensor (20) according to any one of claims 1 to 5, wherein the inertial sensor (20) further comprises:

   a drive electrode and a drive block, wherein a capacitor formed by the drive electrode and the drive block is configured to drive the drive block to move back and forth in the third direction (X) relative to the drive electrode; and
   a second support beam, wherein the second support beam is connected between the drive block and the first mass block (312), and the drive block is configured to drive the first mass block (312) by using the second support beam, so that the first mass block (312) has the displacement component in the third direction (X).

7. The inertial sensor (20) according to any one of claims 1 to 6, wherein the inertial sensor (20) further comprises: a third mass block (314) and a third detection electrode (234), wherein the third mass block (314) can move relative to the third detection electrode (234), the third mass block (314) and the third detection electrode (234) are arranged in the first direction (Z) to form a third capacitor, the third capacitor is configured to detect an angular velocity around the third direction (X), the third mass block (314) is driven to have a displacement component in the second direction (Y), and when the third mass block (314) has an angular velocity component around the third direction (X), the third mass block (314) has a displacement component in the first direction (Z), and the displacement component of the third mass block (314) in the first direction (Z) corresponds to a capacitance value variation of the third capacitor.

8. The inertial sensor (20) according to claim 7, wherein the first mass block (312) is driven by the drive block, the drive block is configured to move back and forth in the third direction (X), a steering beam is connected between the third mass block (314) and the drive block, an end that is of the steering beam and that is close to the drive block is configured to move back and forth in the third direction (X), and an end that is of the steering beam and that is close to the third mass block (314) is configured to move back and forth in the second direction (Y), so that the third mass block (314) has the displacement component in the second direction (Y).

9. The inertial sensor (20) according to claim 7 or 8, wherein the inertial sensor (20) further comprises: a second elastic connector, wherein the second elastic connector is connected between the drive block and the first mass block (312), and is configured to provide buffer space in the first direction (Z) for the third mass block (314).

10. The inertial sensor (20) according to claim 9, wherein the inertial sensor (20) further comprises: a second transmission beam, wherein the second transmission beam is connected between the second elastic connector and the drive block, the second transmission beam can rotate around the third direction (X), and when the third mass block (314) rotates around the third direction (X), a rotation angle of the second transmission beam around the third direction (X) is less than a rotation angle of the third mass block (312) around the third direction (X).

11. The inertial sensor (20) according to any one of claims 7 to 10, wherein the inertial sensor (20) further comprises: a third elastic connector, wherein the third elastic connector is connected to the third mass block (314), and the third elastic connector is configured to provide a support force in the first direction (Z) for the third mass block (314), and is further configured to provide buffer space in the second direction (Y) for the third mass block (314).

12. The inertial sensor (20) according to claim 11, wherein the third elastic connector is located on a side that is of the third mass block (314) and that is away from the second mass block (313).

13. The inertial sensor (20) according to any one of claims 7 to 12, wherein the inertial sensor (20) comprises a mechanical structure layer (300), a coverage layer, and a substrate layer, wherein the mechanical structure layer (300) is located between the coverage layer and the substrate layer, the first mass block (312) and the second mass block (313) are disposed on the mechanical structure layer (300), the first detection electrode (232) is disposed on the substrate layer, and the second detection electrode (233) is disposed on the substrate layer or the mechanical structure layer (300).

14. The inertial sensor (20) according to any one of claims 1 to 13, wherein the inertial sensor (20) is symmetrical with respect to the second direction (Y), and the inertial sensor (20) is symmetrical with respect to the third direction (X).

15. An electronic device (100), comprising the inertial sensor (20) according to any one of claims 1 to 14.

**Patentansprüche**

1. Trägheitssensor (20), umfassend:

einen ersten Massenblock (312) und eine erste Erkennungselektrode (232), wobei sich der erste Massenblock (312) relativ zu der ersten Erkennungselektrode (232) bewegen kann, der erste Massenblock (312) und die erste Erkennungselektrode (232) in einer ersten Richtung (Z) dazu angeordnet sind, einen ersten Kondensator zu bilden, und der erste Kondensator dazu konfiguriert ist, eine Winkelgeschwindigkeit um eine zweite Richtung (Y) zu erkennen;

einen zweiten Massenblock (313) und eine zweite Erkennungselektrode (233), wobei sich der zweite Massenblock (313) relativ zu der zweiten Erkennungselektrode (233) bewegen kann, der zweite Massenblock (313) und die zweite Erkennungselektrode (233) in der zweiten Richtung (Y) dazu angeordnet sind, einen zweiten Kondensator zu bilden, und der zweite Kondensator dazu konfiguriert ist, eine Winkelgeschwindigkeit um die erste Richtung (Z) zu erkennen; und

einen ersten Verbinder (3203+3303), wobei der erste Verbinder (3203+3303) zwischen einem ersten Ende des ersten Massenblocks (312) und einem ersten Ende des zweiten Massenblocks (313) verbunden ist, wobei der erste Massenblock (312) dazu angetrieben wird, eine Verschiebungskomponente in einer dritten Richtung (X) aufzuweisen, und die erste Richtung (Z), die zweite Richtung (Y) und die dritte Richtung (X) orthogonal zueinander sind;

wenn der erste Massenblock (312) eine Winkelgeschwindigkeitskomponente um die erste Richtung (Z) aufweist, der erste Massenblock (312) eine Verschiebungskomponente in der zweiten Richtung (Y) aufweist, der erste Massenblock (312) dazu konfiguriert ist, unter Verwendung des ersten Verbinders (3203+3303) den zweiten Massenblock (313) zu ziehen, um ihn in der zweiten Richtung (Y) zu bewegen, und eine Verschiebungskomponente des zweiten Massenblocks (313) in der zweiten Richtung (Y) einer Änderung des Kapazitätswertes des zweiten Kondensators entspricht; und,

wenn der erste Massenblock (312) eine Winkelgeschwindigkeitskomponente um die zweite Richtung (Y) aufweist, der erste Massenblock (312) eine Verschiebungskomponente in der ersten Richtung (Z) aufweist und die Verschiebungskomponente des ersten Massenblocks (312) in der ersten Richtung (Z) einer Änderung des Kapazitätswertes des ersten Kondensators entspricht;

**dadurch gekennzeichnet, dass** der erste Verbinder (3203+3303) einen ersten elastischen Verbinder (3303) umfasst und der erste elastische Verbinder (3303) dazu konfiguriert ist, einen Pufferraum in der ersten Richtung (Z) und der dritten Richtung (X) für den ersten Massenblock (312) bereitzustellen, sodass eine Verschiebungskomponente des ersten Endes des zweiten Massenblocks (313) in der ersten Richtung (Z) kleiner ist als eine Verschiebungskomponente des ersten Endes des ersten Massenblocks (312) in der ersten Richtung (Z) und eine Verschiebungskomponente des ersten Endes des zweiten Massenblocks (313) in der dritten Richtung (X) kleiner ist als eine Verschiebungskomponente des ersten Endes des ersten Massenblocks (312) in der dritten Richtung (X).

2. Trägheitssensor (20) nach Anspruch 1, wobei der erste Verbinder (3203+3303) ferner Folgendes umfasst: einen ersten Stützbalken (3203), wobei der erste Stützbalken (3203) zwischen dem ersten elastischen Verbinder (3303) und dem zweiten Massenblock (313) verbunden ist.

3. Trägheitssensor (20) nach Anspruch 1 oder 2, wobei der erste Verbinder (3203+3303) ferner Folgendes umfasst: einen ersten Übertragungsbalken (363), wobei sich der erste Übertragungsbalken (363) in die dritte Richtung (X) erstreckt, ein Ende des ersten Übertragungsbalkens (363) zwischen dem ersten elastischen Verbinder (3303) und dem zweiten Massenblock (313) verbunden ist und, wenn der erste Massenblock (312) die Winkelgeschwindigkeitskomponente um die erste Richtung (Z) aufweist, der erste Übertragungsbalken (363) sich um die erste Richtung (Z) dreht.

4. Trägheitssensor (20) nach Anspruch 3, wobei, wenn der erste Massenblock (312) die Winkelgeschwindigkeitskomponente um die zweite Richtung (Y) aufweist, ein Drehwinkel des ersten Übertragungsbalkens (363) um die zweite Richtung (Y) kleiner ist als ein Drehwinkel des ersten Massenblocks (312) um die zweite Richtung (Y).

5. Trägheitssensor (20) nach einem der Ansprüche 1 bis 4, wobei sich der erste Massenblock (312) von dem ersten Ende des zweiten Massenblocks (313) zu einem zweiten Ende des zweiten Massenblocks (313) erstreckt und der Trägheitssensor (20) ferner Folgendes umfasst: einen zweiten Verbinder (3208+3308), wobei der zweite Verbinder (3208+3308) zwischen einem zweiten Ende des ersten Massenblocks (312) und dem zweiten Ende des zweiten Massenblocks (313) verbunden ist und der zweite Verbinder (3208+3308) und der erste Verbinder (3203+3303) symmetrisch zu dem zweiten Massenblock (313) sind.

6. Trägheitssensor (20) nach einem der Ansprüche 1 bis 5, wobei der Trägheitssensor (20) ferner Folgendes umfasst:

eine Antriebselektrode und einen Antriebsblock, wobei ein Kondensator, der durch die Antriebselektrode und den Antriebsblock gebildet ist, dazu konfiguriert ist, den Antriebsblock anzutreiben, sodass er sich rückwärts und vorwärts in der dritten Richtung (X) relativ zu der Antriebselektrode bewegt; und

einen zweiten Stützbalken, wobei der zweite Stützbalken zwischen dem Antriebsblock und dem ersten Massenblock (312) verbunden ist und der Antriebsblock dazu konfiguriert ist, den ersten Massenblock (312) unter Verwendung des zweiten Stützbalkens anzutreiben, sodass der erste Massenblock (312) die Verschiebungskomponente in der dritten Richtung (X) aufweist.

7. Trägheitssensor (20) nach einem der Ansprüche 1 bis 6, wobei der Trägheitssensor (20) ferner Folgendes umfasst: einen dritten Massenblock (314) und eine dritte Erkennungselektrode (234), wobei sich der dritte Massenblock (314) relativ zu der dritten Erkennungselektrode (234) bewegen kann, der dritte Massenblock (314) und die dritte Erkennungselektrode (234) in der ersten Richtung (Z) dazu angeordnet sind, einen dritten Kondensator zu bilden, der dritte Kondensator dazu konfiguriert ist, eine Winkelgeschwindigkeit um die dritte Richtung (X) zu erkennen, der dritte Massenblock (314) dazu angetrieben wird, eine Verschiebungskomponente in der zweiten Richtung (Y) aufzuweisen, und, wenn der dritte Massenblock (314) eine Winkelgeschwindigkeitskomponente um die dritte Richtung (X) aufweist, der dritte Massenblock (314) eine Verschiebungskomponente in der ersten Richtung (Z) aufweist und die Verschiebungskomponente des dritten Massenblocks (314) in der ersten Richtung (Z) einer Änderung des Kapazitätswertes des dritten Kondensators entspricht.

8. Trägheitssensor (20) nach Anspruch 7, wobei der erste Massenblock (312) durch den Antriebsblock angetrieben wird, der Antriebsblock dazu konfiguriert ist, sich rückwärts und vorwärts in der dritten Richtung (X) zu bewegen, ein Steuerbalken zwischen dem dritten Massenblock (314) und dem Antriebsblock verbunden ist, ein Ende, das zu dem Steuerbalken gehört und nahe an dem Antriebsblock ist, dazu konfiguriert ist, sich rückwärts und vorwärts in der dritten Richtung (X) zu bewegen und ein Ende, das zu dem Steuerbalken gehört und das nahe an dem dritten Massenblock (314) ist, dazu konfiguriert ist, sich vorwärts und rückwärts in der zweiten Richtung (Y) zu bewegen, sodass der dritte Massenblock (314) die Verschiebungskomponente in der zweiten Richtung (Y) aufweist.

9. Trägheitssensor (20) nach Anspruch 7 oder 8, wobei der Trägheitssensor (20) ferner Folgendes umfasst: einen zweiten elastischen Verbinder, wobei der zweite elastische Verbinder zwischen dem Antriebsblock und dem ersten Massenblock (312) verbunden ist und dazu konfiguriert ist, einen Pufferraum in der ersten Richtung (Z) für den dritten Massenblock (314) bereitzustellen.

10. Trägheitssensor (20) nach Anspruch 9, wobei der Trägheitssensor (20) ferner Folgendes umfasst: einen zweiten Übertragungsbalken, wobei der zweite Übertragungsbalken zwischen dem zweiten elastischen Verbinder und dem Antriebsblock verbunden ist, der zweite Übertragungsbalken sich um die dritte Richtung (X) drehen kann und, wenn sich der dritte Massenblock (314) um die dritte Richtung (X) dreht, ein Drehwinkel des zweiten Übertragungsbalkens um die dritte Richtung (X) kleiner ist als ein Drehwinkel des dritten Massenblocks (312) um die dritte Richtung (X).

11. Trägheitssensor (20) nach einem der Ansprüche 7 bis 10, wobei der Trägheitssensor (20) ferner Folgendes umfasst: einen dritten elastischen Verbinder, wobei der dritte elastische Verbinder mit dem dritten Massenblock (314) verbunden ist und der dritte elastische Verbinder dazu konfiguriert ist, eine Stützkraft in der ersten Richtung (Z) für den dritten Massenblock (314) bereitzustellen und ferner dazu konfiguriert ist, einen Pufferraum in der zweiten Richtung (Y) für den dritten Massenblock (314) bereitzustellen.

12. Trägheitssensor (20) nach Anspruch 11, wobei sich der dritte elastische Verbinder auf einer Seite befindet, die zu dem dritten Massenblock (314) gehört und die von dem zweiten Massenblock (313) entfernt ist.

13. Trägheitssensor (20) nach einem der Ansprüche 7 bis 12, wobei der Trägheitssensor (20) eine mechanische Strukturschicht (300), eine Deckschicht und eine Substratschicht umfasst, wobei sich die mechanische Strukturschicht (300) zwischen der Deckschicht und der Substratschicht befindet, der erste Massenblock (312) und der zweite Massenblock (313) auf der mechanischen Strukturschicht (300) angeordnet sind, die erste Erkennungselektrode (232) auf der Substratschicht angeordnet ist und die zweite Erkennungselektrode (233) auf der Substratschicht oder der mechanischen Strukturschicht (300) angeordnet ist.

14. Trägheitssensor (20) nach einem der Ansprüche 1 bis 13, wobei der Trägheitssensor (20) symmetrisch zu der zweiten Richtung (Y) ist und der Trägheitssensor (20) symmetrisch zu der dritten Richtung (X) ist.

**15.** Elektronische Vorrichtung (100), umfassend den Trägheitssensor (20) nach einem der Ansprüche 1 bis 14.

**Revendications**

1. Capteur inertiel (20), comprenant :

un premier bloc de masse (312) et une première électrode de détection (232), dans lequel le premier bloc de masse (312) peut se déplacer par rapport à la première électrode de détection (232), le premier bloc de masse (312) et la première électrode de détection (232) sont disposés dans une première direction (Z) pour former un premier condensateur, et le premier condensateur est configuré pour détecter une vitesse angulaire autour d'une deuxième direction (Y) ;

un deuxième bloc de masse (313) et une deuxième électrode de détection (233), dans lequel le deuxième bloc de masse (313) peut se déplacer par rapport à la deuxième électrode de détection (233), le deuxième bloc de masse (313) et la deuxième électrode de détection (233) sont disposés dans la deuxième direction (Y) pour former un deuxième condensateur, et le deuxième condensateur est configuré pour détecter une vitesse angulaire autour de la première direction (Z) ; et

un premier connecteur (3203+3303), dans lequel le premier connecteur (3203+3303) est relié entre une première extrémité du premier bloc de masse (312) et une première extrémité du deuxième bloc de masse (313), dans lequel

le premier bloc de masse (312) est amené à avoir une composante de déplacement dans une troisième direction (X), et la première direction (Z), la deuxième direction (Y) et la troisième direction (X) sont orthogonales entre elles ;

lorsque le premier bloc de masse (312) a une composante de vitesse angulaire autour de la première direction (Z), le premier bloc de masse (312) a une composante de déplacement dans la deuxième direction (Y), le premier bloc de masse (312) est configuré pour tirer, à l'aide du premier connecteur (3203+3303), le deuxième bloc de masse (313) pour se déplacer dans la deuxième direction (Y), et une composante de déplacement du deuxième bloc de masse (313) dans la deuxième direction (Y) correspond à une variation de valeur de capacité du deuxième condensateur ; et

lorsque le premier bloc de masse (312) a une composante de vitesse angulaire autour de la deuxième direction (Y), le premier bloc de masse (312) a une composante de déplacement dans la première direction (Z), et la composante de déplacement du premier bloc de masse (312) dans la première direction (Z) correspond à une variation de valeur de capacité du premier condensateur ;

**caractérisé en ce que** le premier connecteur (3203+3303) comprend un premier connecteur élastique (3303), et le premier connecteur élastique (3303) est configuré pour fournir un espace tampon dans la première direction (Z) et la troisième direction (X) pour le premier bloc de masse (312), de sorte qu'une composante de déplacement de la première extrémité du deuxième bloc de masse (313) dans la première direction (Z) est inférieure à une composante de déplacement de la première extrémité du premier bloc de masse (312) dans la première direction (Z), et qu'une composante de déplacement de la première extrémité du deuxième bloc de masse (313) dans la troisième direction (X) est inférieure à une composante de déplacement de la première extrémité du premier bloc de masse (312) dans la troisième direction (X).

2. Capteur inertiel (20) selon la revendication 1, dans lequel le premier connecteur (3203+3303) comprend également : une première poutre de support (3203), dans lequel la première poutre de support (3203) est reliée entre le premier connecteur élastique (3303) et le deuxième bloc de masse (313).

3. Capteur inertiel (20) selon la revendication 1 ou 2, dans lequel le premier connecteur (3203+3303) comprend également : un premier faisceau de transmission (363), dans lequel le premier faisceau de transmission (363) se prolonge dans la troisième direction (X), une extrémité du premier faisceau de transmission (363) est reliée entre le premier connecteur élastique (3303) et le deuxième bloc de masse (313), et lorsque le premier bloc de masse (312) a la composante de vitesse angulaire autour de la première direction (Z), le premier faisceau de transmission (363) tourne autour de la première direction (Z).

4. Capteur inertiel (20) selon la revendication 3, dans lequel lorsque le premier bloc de masse (312) a la composante de vitesse angulaire autour de la deuxième direction (Y), un angle de rotation du premier faisceau de transmission (363) autour de la deuxième direction (Y) est inférieur à un angle de rotation du premier bloc de masse (312) autour de la deuxième direction (Y).

**5.** Capteur inertiel (20) selon l'une quelconque des revendications 1 à 4, dans lequel le premier bloc de masse (312) se prolonge de la première extrémité du deuxième bloc de masse (313) à une seconde extrémité du deuxième bloc de masse (313), et le capteur inertiel (20) comprend également :
un second connecteur (3208+3308), dans lequel le second connecteur (3208+3308) est relié entre une seconde extrémité du premier bloc de masse (312) et la seconde extrémité du deuxième bloc de masse (313), et le second connecteur (3208+3308) et le premier connecteur (3203+3303) sont symétriques par rapport au deuxième bloc de masse (313).

**6.** Capteur inertiel (20) selon l'une quelconque des revendications 1 à 5, dans lequel le capteur inertiel (20) comprend également :

une électrode d'entraînement et un bloc d'entraînement, dans lequel un condensateur formé par l'électrode d'entraînement et le bloc d'entraînement est configuré pour entraîner le bloc d'entraînement pour qu'il se déplace d'avant en arrière dans la troisième direction (X) par rapport à l'électrode d'entraînement ; et
une seconde poutre de support, dans lequel la seconde poutre de support est reliée entre le bloc d'entraînement et le premier bloc de masse (312), et le bloc d'entraînement est configuré pour entraîner le premier bloc de masse (312) à l'aide de la seconde poutre de support, de sorte que le premier bloc de masse (312) ait la composante de déplacement dans la troisième direction (X).

**7.** Capteur inertiel (20) selon l'une quelconque des revendications 1 à 6, dans lequel le capteur inertiel (20) comprend également :
un troisième bloc de masse (314) et une troisième électrode de détection (234), dans lequel le troisième bloc de masse (314) peut se déplacer par rapport à la troisième électrode de détection (234), le troisième bloc de masse (314) et la troisième électrode de détection (234) sont disposés dans la première direction (Z) pour former un troisième condensateur, le troisième condensateur est configuré pour détecter une vitesse angulaire autour de la troisième direction (X), le troisième bloc de masse (314) est entraîné pour avoir une composante de déplacement dans la deuxième direction (Y), et lorsque le troisième bloc de masse (314) a une composante de vitesse angulaire autour de la troisième direction (X), le troisième bloc de masse (314) a une composante de déplacement dans la première direction (Z), et la composante de déplacement du troisième bloc de masse (314) dans la première direction (Z) correspond à une variation de valeur de capacité du troisième condensateur.

**8.** Capteur inertiel (20) selon la revendication 7, dans lequel le premier bloc de masse (312) est entraîné par le bloc d'entraînement, le bloc d'entraînement est configuré pour se déplacer d'avant en arrière dans la troisième direction (X), une poutre de direction est reliée entre le troisième bloc de masse (314) et le bloc d'entraînement, une extrémité qui est de la poutre de direction et qui est proche du bloc d'entraînement est configurée pour se déplacer d'avant en arrière dans la troisième direction (X), et une extrémité qui est de la poutre de direction et qui est proche du troisième bloc de masse (314) est configurée pour se déplacer d'avant en arrière dans la deuxième direction (Y), de sorte que le troisième bloc de masse (314) ait la composante de déplacement dans la deuxième direction (Y).

**9.** Capteur inertiel (20) selon la revendication 7 ou 8, dans lequel le capteur inertiel (20) comprend également :
un deuxième connecteur élastique, dans lequel le deuxième connecteur élastique est relié entre le bloc d'entraînement et le premier bloc de masse (312), et est configuré pour fournir un espace tampon dans la première direction (Z) pour le troisième bloc de masse (314).

**10.** Capteur inertiel (20) selon la revendication 9, dans lequel le capteur inertiel (20) comprend également :
un second faisceau de transmission, dans lequel le second faisceau de transmission est relié entre le deuxième connecteur élastique et le bloc d'entraînement, le second faisceau de transmission peut tourner autour de la troisième direction (X), et lorsque le troisième bloc de masse (314) tourne autour de la troisième direction (X), un angle de rotation de le second faisceau de transmission autour de la troisième direction (X) est inférieur à un angle de rotation du troisième bloc de masse (312) autour de la troisième direction (X).

**11.** Capteur inertiel (20) selon l'une quelconque des revendications 7 à 10, dans lequel le capteur inertiel (20) comprend également :
un troisième connecteur élastique, dans lequel le troisième connecteur élastique est relié au troisième bloc de masse (314), et le troisième connecteur élastique est configuré pour fournir une force de support dans la première direction (Z) pour le troisième bloc de masse (314), et est également configuré pour fournir un espace tampon dans la deuxième direction (Y) pour le troisième bloc de masse (314).

**12.** Capteur inertiel (20) selon la revendication 11, dans lequel le troisième connecteur élastique est situé sur un côté qui est du troisième bloc de masse (314) et qui est éloigné du deuxième bloc de masse (313).

**13.** Capteur inertiel (20) selon l'une quelconque des revendications 7 à 12, dans lequel le capteur inertiel (20) comprend une couche de structure mécanique (300), une couche de couverture et une couche de substrat, dans lequel la couche de structure mécanique (300) est située entre la couche de couverture et la couche de substrat, le premier bloc de masse (312) et le deuxième bloc de masse (313) sont disposés sur la couche de structure mécanique (300), la première électrode de détection (232) est disposée sur la couche de substrat et la deuxième électrode de détection (233) est disposée sur la couche de substrat ou la couche de structure mécanique (300).

**14.** Capteur inertiel (20) selon l'une quelconque des revendications 1 à 13, dans lequel le capteur inertiel (20) est symétrique par rapport à la deuxième direction (Y), et le capteur inertiel (20) est symétrique par rapport à la troisième direction (X).

**15.** Dispositif électronique (100), comprenant le capteur inertiel (20) selon l'une quelconque des revendications 1 à 14.

FIG. 1

FIG. 2

Symmetrical axis y

300

341

3301

311

3302

3305

351

352

3201

3204

3303

3309

363

315

312

3203 3209

342

3203

313

371

362

361

3202

316

3207

Symmetrical
axis x

372

3208 3210

364

3205

314

3206

353

354

3306

3307

3304

343

Y

Z

X

FIG. 3A

FIG. 3B

FIG. 4

FIG. 5

FIG. 6

FIG. 7A

FIG. 7B

FIG. 7C

FIG. 8A

311  361  342  3305  314

3302

341  231  234  343

Z

Y  ⊗  X

FIG. 8B

300

3303  363  3409

312

3202

381

373  374

3207

315

364

Z  Y

X

FIG. 9A

FIG. 9B

FIG. 10A

FIG. 10B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013333470 A1
- US 2011232384 A1